# EUROPEAN PATENT APPLICATION

(11) **EP 4 838 640 A1**
(43) Date of publication of application: **11.11.2026**
(21) Application number: 26174202.7
(22) Date of filing: 23.04.2026
(51) Int. Cl.: H01M 50/103, H01M 50/54, H01M 50/209, H01M 50/533, H01M 50/553

(54) **SECONDARY BATTERY INCLUDING ELECTRODE ASSEMBLY AND BATTERY MODULE INCLUDING SECONDARY BATTERY**

(30) Priority: 09.05.2025 KR 20250060532
(71) Applicant: SAMSUNG SDI CO., LTD., Yongin-si, Gyeonggi-do 17084 (KR)
(72) Inventor: KIM, Hyeok Joo, 16678 Suwon-si, Gyeonggi-do (KR); CHOI, Hyun Deok, 16678 Suwon-si, Gyeonggi-do (KR); KIM, Bo Hun, 16678 Suwon-si, Gyeonggi-do (KR); YOO, Seung Yeol, 16678 Suwon-si, Gyeonggi-do (KR); KIM, Heon Hee, 16678 Suwon-si, Gyeonggi-do (KR); KIM, Duck Hyun, 16678 Suwon-si, Gyeonggi-do (KR); JANG, Woon Suk, 16678 Suwon-si, Gyeonggi-do (KR)
(74) Representative: Bardehle Pagenberg Partnerschaft mbB Patentanwälte Rechtsanwälte

(57) **Abstract**

Provided are a secondary battery and a battery module including the same to implement a current collector structure by using a conductive adhesive. The secondary battery includes a case, an electrode assembly arranged inside the case and including a first electrode and a second electrode, a first tab member extending from the electrode assembly and connected to the first electrode, a first terminal penetrating the case and arranged to face the first tab member, a first current collector arranged inside the case and connected to the first terminal, and a first adhesive member in contact with the first current collector and the first tab member and electrically connecting the first current collector to the first tab member.

## Description

### CROSS REFERENCE TO RELATED APPLICATION

This application claims priority to Korean Patent Application No. 10-2025-0060532, filed on May 9, 2025, in the Korean Intellectual Property Office, the entire disclosure of which is incorporated herein by reference.

### FIELD

The present disclosure relates to a secondary battery and more particularly to a secondary battery having an electrode assembly, and to a battery module including a secondary battery.

### BACKGROUND

Generally, secondary batteries are batteries that can be charged and discharged, unlike primary batteries that cannot be recharged. Low-capacity secondary batteries are used in portable small electronic devices such as smartphones, feature phones, laptop computers, digital cameras, and camcorders, while high-capacity secondary batteries are widely used as power sources for motor driving in hybrid vehicles, electric vehicles, and the like, and batteries for power storage, or the like. These secondary batteries include an electrode assembly composed of a positive electrode and a negative electrode, a case which accommodates the electrode assembly, and an electrode terminal connected to the electrode assembly.

The secondary battery may be used as a battery pack formed of a plurality of unit battery cells connected in series and/or parallel to provide high energy density. The battery pack may be formed by interconnecting electrode terminals of a plurality of unit batteries to meet the required amount of power, and to implement a high-power secondary battery of, for example, an electric vehicle.

The herein-described information disclosed in the technology that forms the background of the present disclosure is only intended to improve understanding of the background of the present disclosure, and thus may include information that does not constitute the related art.

### SUMMARY

In accordance with the present invention, a secondary battery with the features of claim 1 and a battery module with the features of claim 15 are provided.

According to an aspect of the present disclosure, a secondary battery includes a case, an electrode assembly arranged inside the case and including a first electrode and a second electrode, a first tab member extending from the electrode assembly and connected to the first electrode, a first terminal penetrating the case and arranged to face the first tab member, a first current collector arranged inside the case and connected to the first terminal, and a first adhesive member in contact with the first current collector and the first tab member and electrically connecting the first current collector to the first tab member.

The first current collector may include a first terminal plate arranged between the first tab member and the first terminal and in contact with the first terminal and preferably a first tab plate connected to the first terminal plate and arranged to face the first tab member.

A thickness of the first terminal plate may be greater than or equal to a thickness of the first tab plate.

The first tab plate may be provided as a pair, and preferably the pair of first tab plates may be arranged on substantially opposite sides of the first terminal plate.

The first adhesive member may include a first adhesive layer arranged between the first tab member and the first tab plate.

The first adhesive member may further include a first extended adhesive layer connected to the first adhesive layer and arranged between the first tab member and the first terminal plate.

The first current collector may further include a plurality of first inlet holes penetrating the first tab plate, and preferably the first adhesive member may include a first adhesive filler arranged inside the first inlet hole.

The first adhesive member may further include a first adhesive layer connected to the first adhesive filler and arranged between the first tab member and the first tab plate.

The first tab member may include a plurality of first tabs extending from the first electrode in a first direction and stacked in a second direction intersecting the first direction, and preferably the first inlet hole may extend substantially in the second direction.

The first current collector may further include a first protrusion protruding from the first tab plate to an inside of the first inlet hole.

The first current collector may further include a pair of first cover plates connected to at least one of the first terminal plate and the first tab plate and arranged to surround substantially opposite sides of the first tab member.

The first tab member may include a plurality of first tabs extending from the first electrode in a first direction and stacked in a second direction intersecting the first direction, and preferably the pair of first cover plates may be arranged to face one another substantially in the second direction.

A width of the first tab plate in the second direction may be less than a width of the electrode assembly substantially in the second direction, and a distance between the pair of first cover plates may decrease toward the first direction.

A width of the first tab member substantially in the second direction may decrease toward the first direction.

The secondary battery may further include a second tab member extending from the electrode assembly and connected to the second electrode, a second terminal penetrating the case and arranged to face the second tab member, a second current collector arranged between the second terminal and the second tab member and connected to the second terminal, and a second adhesive member in contact with the second current collector and the second tab member and electrically connecting the second current collector to the second tab member.

The second current collector may include a second terminal plate arranged between the second tab member and the second terminal and in contact with the second terminal and a second tab plate connected to the second terminal plate and arranged to face the second tab member.

The second adhesive member may include a second adhesive layer arranged between the second tab member and the second tab plate.

The second current collector may further include a plurality of second inlet holes penetrating the second plate, and the second adhesive member may include a second adhesive filler arranged inside the second inlet hole.

The second current collector may further include a pair of second cover plates connected to at least one of the second terminal plate and the second tab plate and arranged to surround substantially opposite sides of the second tab member.

According to another aspect of the present disclosure, a battery module includes a housing and a plurality of secondary batteries arranged inside the housing, in which each of the plurality of secondary batteries includes a case, an electrode assembly arranged inside the case and including a first electrode and a second electrode, a first tab member extending from the electrode assembly and connected to the first electrode, a first terminal penetrating the case and arranged to face the first tab member, a first current collector arranged inside the case and connected to the first terminal, and a first adhesive member in contact with the first current collector and the first tab member and electrically connecting the first current collector to the first tab member.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically showing a configuration of a battery module according to embodiments of the present disclosure;
FIG. 2 is a perspective view schematically showing a configuration of a secondary battery according to embodiments of the present disclosure;
FIG. 3 is an exploded perspective view schematically showing the configuration of the secondary battery according to embodiments of the present disclosure;
FIG. 4 is a view schematically showing a configuration of an electrode assembly according to embodiments of the present disclosure;
FIG. 5 is a cross-sectional view schematically showing the configuration of the secondary battery according to embodiments of the present disclosure;
FIG. 6 is a cross-sectional view schematically showing the configuration of the secondary battery according to embodiments of the present disclosure;
FIG. 7 is a plan view schematically showing the configuration of the secondary battery according to embodiments of the present disclosure;
FIG. 8 is a cross-sectional view schematically showing the configuration of the secondary battery according to embodiments of the present disclosure;
FIG. 9 is a perspective view schematically showing configurations of a first current collector and a second current collector according to embodiments of the present disclosure;
FIG. 10 is a cross-sectional view schematically showing the configuration of the secondary battery according to embodiments of the present disclosure;
FIG. 11 is a plan view schematically showing the configuration of the secondary battery according to embodiments of the present disclosure;
FIG. 12 is a perspective view schematically showing the configurations of the first current collector and the second current collector according to embodiments of the present disclosure;
FIG. 13 is a plan view schematically showing the configuration of the secondary battery according to embodiments of the present disclosure;
FIG. 14 is a perspective view schematically showing the configurations of the first current collector and the second current collector according to embodiments of the present disclosure;
FIG. 15 is a perspective view schematically showing the configuration of the secondary battery according to embodiments of the present disclosure;
FIG. 16 is a cross-sectional view schematically showing a configuration of a first cover plate according to embodiments of the present disclosure; and
FIG. 17 is a cross-sectional view schematically showing a configuration of a second cover plate according to embodiments of the present disclosure.

### DETAILED DESCRIPTION

Hereinafter, exemplary embodiments of the present disclosure will be described in detail with reference to the attached drawings. Prior to this, terms or words used in this specification and claims should not be interpreted as being limited to ordinary or dictionary meanings and should be interpreted as meanings and concepts consistent with the technical idea of this disclosure based on the principle that the inventor can properly define the concept of the term in order to describe his or her disclosure in the best way. Accordingly, it is to be understood that the embodiments described herein, and the configurations illustrated in the drawings are only some of the most exemplary embodiments of the disclosure and do not represent all of the technical ideas of the disclosure, and that there may be various equivalents and modifications that may replace them at the time of filing.

Furthermore, when used herein, the terms "comprise or include" and/or "comprising or including" specify the presence of the mentioned shapes, numbers, steps, operations, members, elements, and/or groups thereof and are not intended to exclude the presence or addition of one or more other shapes, numbers, operations, members, elements, and/or groups thereof.

In addition, in order to help understand the disclosure, the attached drawings are not drawn to actual scale, and the dimensions of some components may be exaggerated. In addition, the same reference numbers may be assigned to the same components in different embodiments.

The statement that two objects for comparison are 'equal' means 'substantially the same.' Therefore, substantially the same may include deviations that are considered low in the art, for example, deviations of less than 5%. Additionally, uniformity of a parameter over a given region may mean uniformity from an average perspective.

Although first, second, and the like are used to describe various components, the components are not limited by these terms. These terms are used only to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" another component, the herein components may be directly connected or coupled to one another, but it should be understood that other components may be "interposed" between each component, or each component may be "connected," "coupled," or "linked" through another component.

As used herein, the term "and/or" includes any and all combinations of one or more of the associated listed items. Further, the use of "may" when describing embodiments of the present disclosure relates to "one or more embodiments of the present disclosure." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When "C to D" is stated, it means greater than or equal to C and less than or equal to D unless otherwise specifically stated. When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above." Therefore, the term "below" can encompass both the upward and downward directions.

The terms used in the present specification are intended to describe the embodiments of the present disclosure, and are not intended to limit the present disclosure.

The present disclosure aims to provide a secondary battery and a battery module including the same in which a current collector structure may be implemented using a conductive adhesive.

These and other aspects and features of the present disclosure will be described in or will be apparent from the following description of some embodiments of the present disclosure.

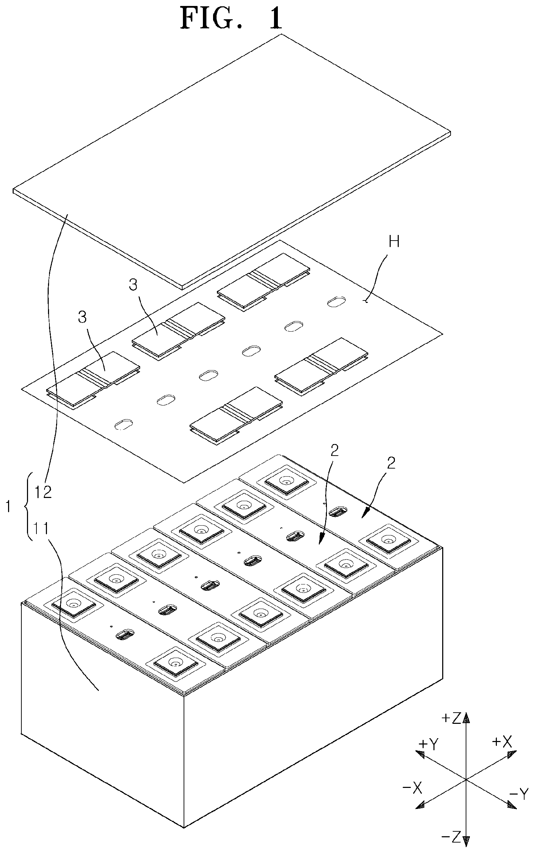

FIG. 1 is a perspective view schematically showing a configuration of an battery module according to embodiments of the present disclosure.

Referring to FIG. 1, the battery module according to the embodiments may include a housing 1 and a secondary battery 2.

The housing 1 may form a rough appearance of the battery module and may provide a space in which the secondary battery 2 may be received.

The housing 1 according to the embodiments may include a housing body 11 and a cover 12.

The housing body 11 may be formed to have a form of a box having a hollow inner side and one open side. A cross-sectional shape of the housing body 11 is not limited to a quadrangle shown in FIG. 1, and a design thereof may be changed into various shapes such as a polygon, a circle, an oval, etc.

The cover 12 may be coupled to the housing body 11 and may close an inner space of the housing body 11. For example, the cover 12 may be formed to have an approximately plate shape may be arranged to face the open side of the housing body 11. The cover 12 may be fixed to the housing body 11 by various types of coupling methods, such as bolting, welding, fitting, and the like.

The secondary battery 2 may function as a unit structure for storing and supplying power in the battery module. The secondary battery 2 may be arranged inside the housing 1.

The secondary battery 2 may be provided in plural. A plurality of secondary batteries 2 may be arranged in two or more columns along at least one of a longitudinal direction (+X axis or - X axis direction based on FIG. 1) or a width direction (Y axis or -Y axis direction based on FIG. 1) of the housing 1. While FIG. 1 illustrates, by way of example, the plurality of secondary batteries 2 arranged in six columns along the longitudinal direction of the housing 1, the arrangement of the plurality of secondary batteries 2 is not limited thereto, and the design may be modified in various ways. The plurality of secondary batteries 2 may be arranged side by side. The number of secondary batteries 2 may be changed in design depending on the size, shape, etc., of the housing 1.

The plurality of secondary batteries 2 may be electrically connected by a bus bar 3.

The bus bar 3 according to the embodiments may be arranged between the cover 12 and the secondary battery 2. The bus bar 3 may be provided in plural. Each bus bar 3 may connect a pair of adjacent secondary batteries 2 in series or in parallel.

The bus bar 3 may be formed of electrically conductive materials such as copper, aluminum, nickel, etc. The specific shape of the bus bar 3 is not limited to that shown in FIG. 1, but may be designed in a variety of shapes to electrically connect adjacent secondary batteries 2.

The plurality of bus bars 3 may be supported by a bus bar holder H inside the housing 1.

The bus bar holder H according to the embodiments may be formed to have the shape of a flat plate. The bus bar holder H may be arranged between the cover 12 and the secondary battery 2. The bus bar 3 may be secured to the bus bar holder H by various types of coupling schemes, such as insertion coupling, bolting, injection coupling, etc. The bus bar holder H may include an electrically insulating polymeric compound material.

Hereinbelow, the secondary battery 2 according to the embodiments will be described.

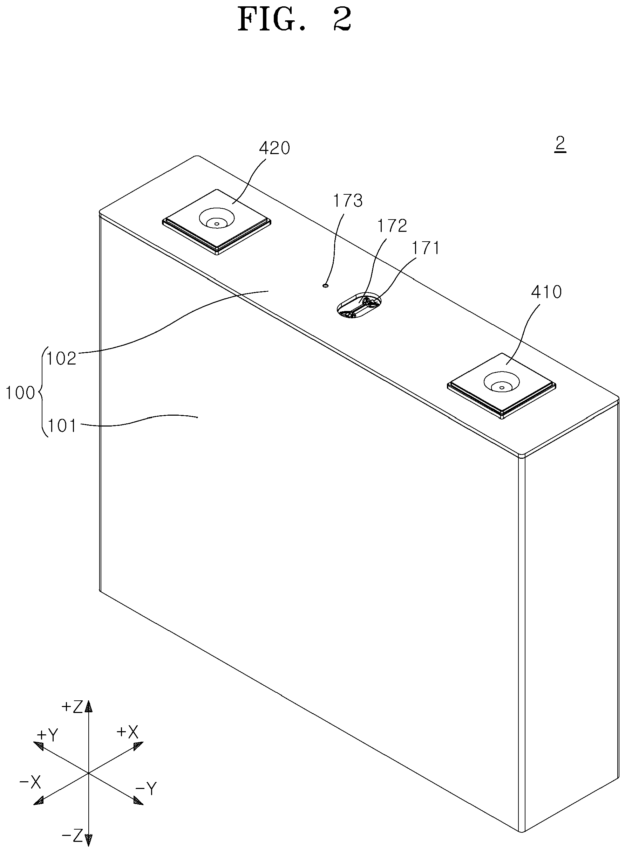

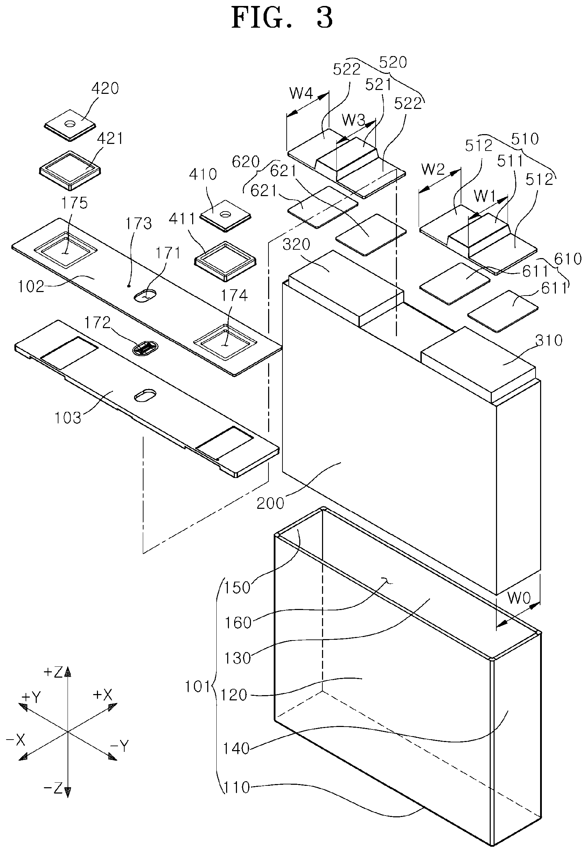

FIG. 2 is a perspective view schematically showing a configuration of a secondary battery according to embodiments of the present disclosure, and FIG. 3 is an exploded perspective view schematically showing the configuration of the secondary battery according to embodiments of the present disclosure.

The following description will be made based on an example where the secondary battery is a lithium-ion secondary battery that is a prismatic battery. However, the present disclosure is not limited thereto, and the secondary battery may be a lithium polymer battery or a cylindrical battery.

A first direction described herein may be exemplified as a +Z-axis direction or upward direction based on FIGS. 2 and 3, a second direction may be exemplified as an +X-axis direction, and a third direction may be exemplified as a +Y-axis direction.

Referring to FIGS. 2 and 3, the secondary battery 2 according to the embodiments may include a case 100, an electrode assembly 200, a first tab member 310, a first terminal 410, a first current collector 510, and a first adhesive member 610.

The case 100 may form a rough appearance of the secondary battery 2 and receive the electrode assembly 200.

The case 100 according to the embodiments may include a can 101 and a cap plate 102.

The can 101 may provide a space in which the electrode assembly 200 may be received.

The can 101 according to the embodiments may include a bottom portion 110, a front portion 120, a rear portion 130, a first side portion 140, and a second side portion 150.

The bottom portion 110 may form a bottom (based on FIG. 3) appearance of the can 101. The bottom portion 110 according to the embodiments may have the form of a rectangular plate. The bottom portion 110 may be placed on a bottom surface of the housing body 11.

The front portion 120, the rear portion 130, the first side portion 140, and the second side portion 150 may form a circumferential appearance of the can 101.

The front portion 120, the rear portion 130, the first side portion 140, and the second side portion 150, according to the embodiments, may have the form of a plate extending in the first direction from an edge of the bottom portion 110. The front portion 120, the rear portion 130, the first side portion 140, and the second side portion 150 may be arranged to surround a space above the bottom portion 110. The front portion 120, the rear portion 130, the first side portion 140, and the second side portion 150 may be arranged to form a rectangular cross-sectional shape.

The front portion 120 and the rear portion 130 may be arranged to face one another along the second direction. The rear portion 130 may be arranged at a predetermined distance away from the front portion 120 in the second direction. The front portion 120 and the rear portion 130 may be arranged parallel to one another. An area of the front portion 120 and an area of the rear portion 130 may be the same as one another.

The first side portion 140 and the second side portion 150 may be arranged to face one another along the third direction. The second side portion 150 may be arranged at a predetermined distance away from the first side portion 140 in the third direction. The first side portion 140 and the second side portion 150 may be arranged parallel to one another. An area of the first side portion 140 and an area of the second side portion 150 may be the same as one another. The areas of the first side portion 140 and the second side portion 150 may be less than the areas of the front portion 120 and the rear portion 130.

The can 101 may further include an open portion 160. The open portion 160 according to the embodiments may mean a space surrounded by top ends of the front portion 120, the rear portion 130, the first side portion 140, and the second side portion 150. The open portion 160 may interconnect an inner space of the can 101 with an outer space.

Thus, the can 101 according to the embodiments may have a cuboid form having an open top side.

The cap plate 102 may be coupled to the can 101 and may seal the open portion 160 of the can 101.

The cap plate 102 according to the embodiments may be formed to have the shape of a flat plate. The cap plate 102 may be arranged in the open portion 160 of the can 101. The cap plate 102 may be arranged to face the bottom portion 110 of the can 101 in the first direction. That is, the cap plate 102 may be arranged at a predetermined distance from the bottom portion 110 in the first direction. The cap plate 102 and the bottom portion 110 may be arranged parallel to one another.

The cap plate 102 may be secured to a top end of the can 101, more specifically, to the top ends of the front portion 120, the rear portion 130, the first side portion 140, and the second side portion 150. The cap plate 102 may be coupled to the can 101 by various types of coupling schemes such as welding, bolting, insertion-coupling, etc.

A vent hole 171 and a vent 172 may be formed in the cap plate 102 according to the embodiments.

The vent hole 171 according to the embodiments may be formed to have the form of a hole that perpendicularly penetrates the cap plate 102 along the first direction. The vent hole 171 may function as a component for providing a path through which a flame, a gas, smoke, etc., formed inside the can 101 are discharged out of the can 101 in the event of thermal runaway of the secondary battery 2 due to over-current, etc. A cross-sectional shape of the vent hole 171 may be changed in design into various shapes, such as an oval, a circle, a polygon, etc.

The vent 172 may be installed in the vent hole 171, and may be opened and closed together with a change in the internal pressure of the can 101. That is, the vent 172 may close the vent hole 171 in a normal operation of the secondary battery 2 to prevent an electrolyte, etc., inside the can 101 from leaking out of the can 101 or moisture, a foreign substance, etc., from entering the can 101. The vent 172 may guide a flame, a gas, smoke, etc., formed inside the can 101 to leak out of the can 101 by opening the vent hole 171 in the event of thermal runaway of the secondary battery 2.

The vent 172 according to the embodiments may be formed to have an approximately plate shape. The vent 172 may be fixed in the cap plate 102 by various types of coupling schemes such as welding, bolting, insertion-coupling, etc. The vent 172 may be arranged inside the vent hole 171 or may be arranged to face the vent hole 171 above or under the cap plate 102 along the first direction.

The thickness of the vent 172 in parallel with the first direction may be less than the thickness of the cap plate 102. Thus, the vent 172 may be easily ruptured or broken when the internal pressure of the can 101 increases. The vent 172 may include a notch formed recessed inwardly from the vent 172 so as to be preferentially broken when the internal pressure of the can 101 increases.

The cap plate 102 according to the embodiments may have an electrolyte inlet 173 formed through the cap plate 102 and into which a sealing stopper may be installed. The electrolyte inlet 173 may be spaced apart from the vent hole 171 by a predetermined distance in the third direction or in a direction opposite to the third direction.

The electrode assembly 200 may function as a unit structure that performs a charging/discharging operation of power in the secondary battery. The electrode assembly 200 may be received inside the can 101.

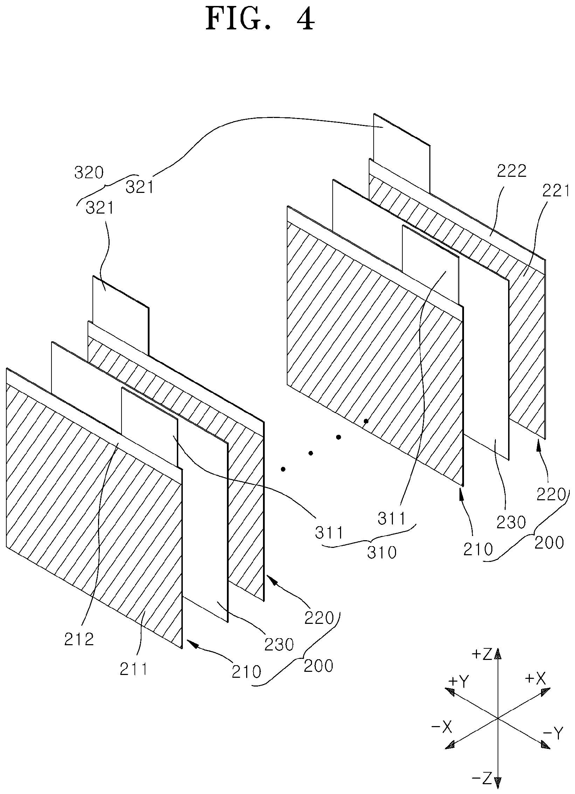

FIG. 4 is a view schematically showing a configuration of an electrode assembly according to embodiments of the present disclosure.

Referring to FIGS. 2 to 4, the electrode assembly 200 according to the embodiments may include a first electrode 210, a second electrode 220, and a separator 230 arranged between the first electrode 210 and the second electrode 220. The first electrode 210, the separator 230, and the second electrode 220 may be provided in plural.

Hereinbelow, an example will be described in which the electrode assembly 200 has a stack form including a plurality of first electrodes 210, a plurality of separators 230, and a plurality of second electrodes 220 being sequentially stacked in the second direction. However, the electrode assembly 200 is not limited to such a form, and may also be formed such that the stacked first electrodes 210, separators 230, and second electrodes 220 are wound in a clockwise direction or a counterclockwise direction with respect to a winding axis parallel to the first direction.

The first electrode 210 may function as any one of a positive electrode or a negative electrode of the electrode assembly 200. Hereinbelow, a description will be made of an example in which the first electrode 210 is the positive electrode of the electrode assembly 200. However, the first electrode 210 is not limited thereto, and may also function as the negative electrode of the electrode assembly 200.

The first electrode 210 according to the embodiments may be formed to have a shape of a foil including a metal material such as aluminum or an aluminum alloy. Type, size, shape, etc., of the first electrode 210 may not be particularly limited as long as the first electrode 210 is conductive without causing a chemical change in the secondary battery. A cross-sectional shape of the first electrode 210 may be changed in design into various shapes as well as a rectangular shape shown in FIG. 4.

The first electrode 210 may be provided in plural. The plurality of first electrodes 210 may be arranged between the front portion 120 and the rear portion 130 of the can 101 in the second direction. The number of first electrodes 210 may be changed in design variously according to a charging capacity, etc., of the secondary battery 2.

A first active material layer 211 may be applied to at least a part of the first electrode 210. The first active material layer 211 may be applied to opposite surfaces of the first electrode 210, or may be applied to one of the surfaces of the first electrode 210.

In the embodiments, as the first electrode 210 functions as the positive electrode, the first active material layer 211 may include a positive electrode active material.

The positive electrode active material may be a compound capable of reversible intercalation and deintercalation of lithium (a lithiated intercalation compound). More specifically, as the positive electrode active material, one or more of composite oxides of a metal selected from the group consisting of cobalt, manganese, nickel, iron, and a combination thereof and lithium may be used.

As an example, the positive electrode active material may include at least one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM). Here, 0 < x < 1, 0 < y <1, 0 < z < 1, and x+y+z = 1 may be satisfied. The positive electrode active material may include only one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM) or may include two or all of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM).

The first active material layer 211 may further include a positive electrode conductive material.

The positive electrode conductive material is used to impart conductivity to the first active material layer 211, and any electronically conductive material that does not cause a chemical change may be used. Examples of the positive electrode conductive material may include carbon-based materials such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, and the like, conductive polymers such as polyphenylene derivatives, or a mixture thereof.

The first active material layer 211 may further include a positive electrode binder.

The positive electrode binder serves to attach the particles constituting the positive electrode active material to one another well, and also attach the positive electrode active material to the first electrode 210 well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The first electrode 210 may include a first uncoated portion 212 onto which the first active material layer 211 is not coated. The first uncoated portion 212 according to the embodiments may be arranged on a top end region of the first electrode 210 arranged to face the open portion 160 inside the can 101. However, the first uncoated portion 212 is not limited to such a form, and may also be formed across the entire edge region of the first electrode 210.

The second electrode 220 may function as any one of the positive electrode or the negative electrode of the electrode assembly 200. Hereinbelow, a description will be made of an example in which the second electrode 220 is the negative electrode of the electrode assembly 200. However, the second electrode 220 is not limited thereto, and may also function as the positive electrode of the electrode assembly 200.

The second electrode 220 may be provided in plural. The plurality of second electrodes 220 may be arranged between the front portion 120 and the rear portion 130 in the second direction. The first electrode 210 and the second electrode 220 may be arranged alternately in the second direction. The second electrode 220 may be spaced apart from the first electrode 210 by a predetermined distance in the second direction.

The second electrode 220 according to the embodiments may be formed to have a shape of a foil including a metal material such as copper, a copper alloy, nickel, or a nickel alloy. Type, size, shape, etc., of the second electrode 220 may not be particularly limited as long as the second electrode 220 is conductive without causing a chemical change in the secondary battery. A cross-sectional shape of the second electrode 220 may be changed in design into various shapes as well as a rectangular shape shown in FIG. 4.

A second active material layer 221 may be applied to at least a part of the second electrode 220. The second active material layer 221 may be applied to opposite surfaces of the second electrode 220, or may be applied to one of the surfaces of the second electrode 220.

As the second electrode 220 functions as a negative electrode, the second active material layer 221 may include a negative electrode active material.

The negative electrode active material may include a material capable of reversible intercalation/deintercalation of lithium ions, a lithium metal, a lithium metal alloy, a material capable of doping and dedoping of lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite such as amorphous, plate-like, flake-like, spherical, or fiber-like natural graphite or artificial graphite, and examples of the amorphous carbon may include soft carbon, hard carbon, mesophase pitch carbide, calcined coke, or the like.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedepoing of lithium, a Si-based negative electrode active material or a Sn-based negative electrode active material may be used. The Si-based negative electrode active material may be silicon, a silicon-carbon composite, SiOx (0 < x ≤ 2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnOx(0 < x ≤ 2, e.g., SnO2), a Sn-based alloy, or a combination thereof.

The silicon-carbon composite may be a composite of silicon and amorphous carbon. According to one embodiment, the silicon-carbon composite may be in the form of silicon particles and amorphous carbon coated on surfaces of the silicon particles. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, so that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or Sn-based negative electrode active material may be used in combination with a carbon-based negative electrode active material.

The second active material layer 221 may further include a negative electrode conductive material and a negative electrode binder.

The negative electrode conductive material is used to impart conductivity to the second active material layer 221, and any electronically conductive material that does not cause a chemical change may be used. Examples of the negative electrode conductive material may include carbon-based materials such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, or the like, conductive polymers such as polyphenylene derivatives, or a mixture thereof.

The negative electrode binder serves to well attach particles constituting the negative electrode active material and also serves to well attach the negative electrode active material to the second electrode 220.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, the aqueous binder may further include a cellulose series compound capable of giving viscosity. As the cellulose series compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The second electrode 220 may include a second uncoated portion 222 onto which the second active material layer 221 is not coated. The second uncoated portion 222 according to the embodiments may be arranged on a top end region of the second electrode 220 arranged to face the open portion 160 inside the can 101. However, the second uncoated portion 222 is not limited to such a form, and may also be formed across the entire edge region of the second electrode 220.

The separator 230 may be arranged between the first electrode 210 and the second electrode 220. The separator 230 may prevent a short circuit between the first electrode 210 and the second electrode 220 while allowing movement of lithium ions between the first electrode 210 and the second electrode 220.

The separator 230 may be arranged to completely surround a surface region of the electrode assembly 200. Thus, the separator 230 may prevent the first electrode 210 and the second electrode 220 from being exposed directly to an outer side of the electrode assembly 200.

The separator 230 may be made of polyethylene, polypropylene, polyvinylidene fluoride, or a multilayer film of two or more layers thereof, and a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separator 230 may include a porous substrate and a coating layer including an organic material, an inorganic material, or a combination thereof, which is positioned on one surface or both surfaces of the porous substrate.

The porous substrate may be a polymer film made of one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more of the herein materials.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and the inorganic material may be mixed in one coating layer or may be in the form of a coating layer including (or containing) an organic material and a coating layer including (or containing) an inorganic material which are stacked on one another.

An insulating plate 103 may be arranged between the cap plate 102 and the electrode assembly 200 according to the embodiments. The insulating plate 103 may insulate the cap plate 102 from the electrode assembly 200 by preventing direct contact between the cap plate 102 and the electrode assembly 200. The insulating plate 103 may fix the position of the electrode assembly 200 inside the can 101. The insulating plate 103 may prevent the electrode assembly 200 from being broken in the event that the cap plate 102 is deformed inwardly from the can 101 by an external impact or the like.

The insulating plate 103 according to the embodiments may be arranged inside the can 101 to face the electrode assembly 200 in the first direction. That is, the electrode assembly 200, the insulating plate 103, and the cap plate 102 may be arranged sequentially along the first direction. The insulating plate 103 may be fixed to an inner surface of the can 101 by various types of coupling schemes such as insertion-coupling, welding, bolting, adhesion, etc. The insulating plate 103 may be formed of an insulating material such as polyethylene (PE), polypropylene (PP), polyethylene terephthalate (PET) rubber, polyphenylene sulfide (PPS), etc.

The first tab member 310 may extend from the electrode assembly 200 and may be connected to the first electrode 210. As the first electrode 210 is illustrated as the positive electrode, the first tab member 310 may function as a positive-electrode tab of the secondary battery 2. However, the first tab member 310 is not limited thereto, and when the first electrode 210 is the negative electrode, the first tab member 310 may function as a negative-electrode tab of the secondary battery 2.

In the embodiments, a distance from the first side portion 140 to the first tab member 310 may be less than a distance from the second side portion 150 to the first tab member 310. That is, the first tab member 310 may be arranged at a position relatively closer to the first side portion 140 than the second side portion 150 with respect to a central portion of the electrode assembly 200 that faces the vent 172 inside the can 101.

In the embodiments, a width of the first tab member 310 in the second direction may be equal to a width WO of the electrode assembly 200 in the second direction.

The first tab member 310 according to the embodiments may include a plurality of first tabs 311.

The first tab 311 according to the embodiments may have the form of a foil extending along the first direction from a first uncoated portion 212 of the first electrode 210. The first tab 311 may have an approximately rectangular shape. However, the shape of the first tab 311 is not limited thereto and may be changed in design into various shapes.

The first tab 311 may be formed integrally with the first electrode 210. For example, the first tab 311 may be a region of the first uncoated portion 212 remaining after a partial region of the first uncoated portion 212 is cut or removed by notching processing, etc. On the other hand, the first tab 311 may be connected to the first uncoated portion 212 by welding, etc., after being manufactured separately from the first electrode 210. A material for the first tab 311 may be the same as a material for the first electrode 210.

The number of first tabs 311 may be equal to the number of first electrodes 210. Each first tab 311 may extend separately from the first uncoated portion 212 of a different first electrode 210. The plurality of first tabs 311 may be stacked in the second direction. The plurality of first tabs 311 may be arranged parallel to one another. Accordingly, the first tab member 310 according to the embodiments may include a group of the plurality of first tabs 311 stacked along the second direction. The adjacent first tabs 311 may be in contact with one another and may be spaced apart by a sum of a thickness of the separator 230 and a thickness of the second electrode 220.

The first terminal 410 may function as the bus bar 3 or a configuration that provides electrical connection between an external power device and the first electrode 210 of the secondary battery 2. The first terminal 410 may be electrically connected to the first electrode 210. Accordingly, the first terminal 410 may function as the positive-electrode terminal of the secondary battery 2.

The first terminal 410 according to the embodiments may be formed of an electrically conductive material such as aluminum, nickel, copper, etc.

The first terminal 410 may penetrate the case 100 and be arranged to face the first tab member 310. In an example, the first terminal 410 may be inserted into a first terminal hole 174 formed through the cap plate 102. The bottom end of the first terminal 410 may be arranged to face the first tab member 310 in the first direction through the first terminal hole 174. A top end of the first terminal 410 may protrude upwardly from the cap plate 102. While it is shown in the drawing that the first terminal 410 has a quadrangular cross-sectional shape, the cross-sectional shape of the first terminal 410 is not limited thereto and may be changed in design into various shapes such as a circle, an oval, a polygon, etc.

The bus bar 3 may be placed on a top surface of the first terminal 410. The bus bar 3 and the first terminal 410 may be integrally bonded, for example by laser welding, etc.

A first gasket 411 may be arranged between the cap plate 102 and the first terminal 410 according to the embodiments.

The first gasket 411 may function as a component for electrically insulating the cap plate 102 and the first terminal 410 from one another.

The first gasket 411 according to the embodiments may be formed of an insulating material such as polyethylene (PE), polypropylene (PP), polyethylene terephthalate (PET) rubber, polyphenylene sulfide (PPS), etc. An inner circumferential surface of the first gasket 411 may be arranged to surround an outer circumferential surface of the first terminal 410. The outer circumferential surface of the first gasket 411 may be fixed to the inner circumferential surface of the cap plate 102 surrounding the first terminal hole 174.

The first current collector 510 and the first adhesive member 610 may function as a component for providing electrical connection between the first terminal 410 and the first tab member 310.

The first current collector 510 may be arranged inside the case 100 and connected to the first terminal 410. The first current collector 510 may be formed of a conductive material such as copper, aluminum, nickel, etc.

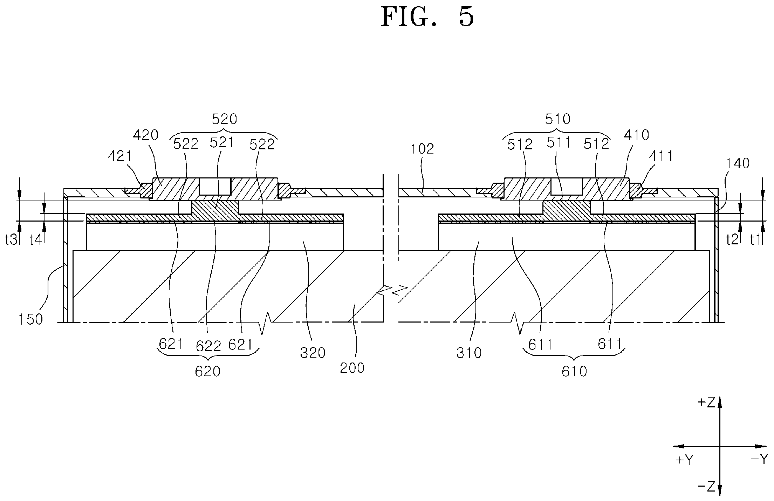

FIG. 5 is a cross-sectional view schematically showing the configuration of the secondary battery according to embodiments of the present disclosure.

Referring to FIGS. 2 to 5, the first current collector 510 according to the embodiments may include a first terminal plate 511 and a first tab plate 512.

The first terminal plate 511 may form a side exterior of the first current collector 510 and may support the first tab plate 512.

The first terminal plate 511 according to the embodiments may have the form of a plate perpendicular to the first direction. The first terminal plate 511 may be arranged between the first tab member 310 and the first terminal 410. In the embodiments, the first tab member 310, the first terminal plate 511, and the first terminal 410 may be arranged sequentially along the first direction.

The first terminal plate 511 and the first terminal 410 may be mechanically and electrically connected by welding. In an example, the top surface of the first terminal plate 511 may contact the bottom surface of the first terminal 410, and the top surface of the first terminal plate 511 and the bottom surface of the first terminal 410 may be bonded to one another by laser welding or ultrasonic welding.

The bottom surface of the first terminal plate 511 may be spaced apart from the first tab member 310 in the first direction by a predetermined distance. The bottom surface of the first terminal plate 511 may be arranged to face a part of the top surface of the first tab member 310.

The cross-sectional area of the first terminal plate 511 perpendicular to the first direction may be less than the cross-sectional area of the first tab member 310 perpendicular to the first direction. The cross-sectional area of the first terminal plate 511 perpendicular to the first direction may be less than or equal to the cross-sectional area of the first terminal 410 perpendicular to the first direction.

In the embodiments, a width W1 of the first terminal plate 511 in the second direction may be equal to the width WO of the electrode assembly 200 in the second direction.

The cross-sectional shape of the first terminal plate 511 may be designed in various shapes, such as a circular shape, an oval shape, a polygonal shape, etc., as well as the rectangular shape shown in the drawing.

The first tab plate 512 may be connected to the first terminal plate 511, and may form the other side exterior of the first current collector 510.

The first tab plate 512 according to the embodiments may have the form of a plate perpendicular to the first direction. One end of the first tab plate 512 may be connected to a side surface of the first terminal plate 511. An end of the first tab plate 512 may be directly connected to the side surface of the first terminal plate 511, or may be indirectly connected to the side surface of the first terminal plate 511 by other connecting means.

The first tab plate 512 may be provided as a pair. The pair of first tab plates 512 may be arranged on opposite sides of the first terminal plate 511. In an example, the pair of first tab plates 512 may be arranged to face one another along the third direction with the first terminal plate 511 therebetween.

The first tab plate 512 may be arranged between the first tab member 310 and the cap plate 102. A top surface of the first tab plate 512 may be spaced apart from a bottom surface of the cap plate 102 by a predetermined distance along a direction opposite to the first direction.

A bottom surface of the first tab plate 512 may be arranged to face a top surface of the first tab member 310. For example, the bottom surface of the first tab plate 512 may be arranged to face the remaining part of the top surface of the first tab member 310 that does not face the first terminal plate 511. The bottom surface of the first tab plate 512 may be spaced apart from the first tab member 310 in the first direction by a predetermined distance.

In the embodiments, a width W2 of the first tab plate 512 in the second direction may be equal to the width WO of the electrode assembly 200 in the second direction. Thus, the first tab plate 512 may be arranged to face all of the plurality of first tabs 311 stacked in the second direction.

A thickness t1 of the first terminal plate 511 in the first direction may be greater than a thickness t2 of the first tab plate 512 in the first direction. Thus, the first terminal plate 511 may more easily contact the first terminal 410.

However, the thickness t1 of the first terminal plate 511 in the first direction is not limited thereto, and may be formed to be equal to the thickness t2 of the first tab plate 512 in the first direction. In case that the thickness t1 of the first terminal plate 511 in the first direction is equal to the thickness t2 of the first tab plate 512 in the first direction, the height of the top surface of the first terminal plate 511 may be greater than the height of the top surface of the first tab plate 512.

The first adhesive member 610 may be in contact with the first current collector 510 and the first tab member 310. The first adhesive member 610 may mechanically and electrically connect the first current collector 510 and the first tab member 310.

The first adhesive member 610 according to the embodiments may include a conductive adhesive having both conductive and adhesive properties. For example, the first adhesive member 610 may include a conductive adhesive, or may include a conductive adhesive mixed with other additives.

The conductive adhesive may include a polymeric resin and a conductive filler.

The polymeric resin may include at least one of polyester (PEs), polyethylene (PE), polypropylene (PP), polyamide (PA), polyimide (PI), polycarbonate (PC), polyacetal (POM), polyethylene terephthalate (PET), polybutylene terephthalate (PBT), polyphenylene sulfide (PPS), epoxy, acrylic, butyl rubber, isoprene rubber, and chloroprene rubber.

The conductive filler may include at least one of gold (Au), silver (Ag), platinum (Pt), copper (Cu), tin (Sn), iron (Fe), titanium (Ti), nickel (Ni), palladium (Pd), aluminum (Al), tungsten (W), molybdenum (Mo), ruthenium (Ru), chromium (Cr), indium (In), lead (Pb), and a carbon nanotube (CNT). The conductive filler may be mixed into the polymer resin in the form of spherical, flake, or fibrous powders.

The first adhesive member 610 may be melted in a liquid state and come into contact with the first current collector 510 and the first tab member 310, and may be hardened to a solid state and mechanically and electrically connect the first current collector 510 to the first tab member 310.

The first adhesive member 610 according to the embodiments may include a first adhesive layer 611.

The first adhesive layer 611 may electrically and mechanically connect the first tab member 310 to the first tab plate 512.

The first adhesive layer 611 according to the embodiments may have the form of a film having a predetermined thickness between the first tab member 310 and the first tab plate 512. The thickness of the first adhesive layer 611 may be variously design-changed depending on a distance between the first tab member 310 and the first tab plate 512, etc. The area of the first adhesive layer 611 may be equal to the area of a part of the top surface of the first tab member 310 that faces the first tab plate 512 in the entire area of the top surface of the first tab member 310.

The first adhesive layer 611 may be provided in a pair. Each first adhesive layer 611 may be individually arranged under a different first tab plate 512.

The first adhesive layer 611 may be formed by applying a conductive adhesive melted to the liquid state to the top surface of the first tab member 310 facing the first tab plate 512. The first tab plate 512 may be placed on the first adhesive layer 611 applied to the first tab member 310, and the first adhesive layer 611 may be hardened to the solid state and may electrically and mechanically connect the first tab plate 512 to the first tab member 310.

The secondary battery 2 according to the embodiments may further include a second tab member 320, a second terminal 420, a second current collector 520, and a second adhesive member 620.

The second tab member 320 may extend from the electrode assembly 200 and may be connected to the second electrode 220. As the second electrode 220 is illustrated as the negative electrode, the second tab member 320 may function as a negative-electrode tab of the secondary battery 2. However, the second tab member 320 is not limited thereto, and when the second electrode 220 is the negative electrode, the second tab member 320 may function as a positive-electrode tab of the secondary battery 2.

The first tab member 310 and the second tab member 320 may be arranged to face one another in the third direction. As an example, the second tab member 320 may be spaced apart from the first tab member 310 by a predetermined distance in the third direction.

In the embodiments, a distance from the second side portion 150 to the second tab member 320 may be less than a distance from the first side portion 140 to the second tab member 320. That is, the second tab member 320 may be arranged at a position relatively closer to the second side portion 150 than the first side portion 140 with respect to a central portion of the electrode assembly 200 that faces the vent 172 inside the can 101.

In the embodiments, a width of the second tab member 320 in the second direction may be equal to the width WO of the electrode assembly 200 in the second direction.

The second tab member 320 according to the embodiments may include a plurality of second tabs 321.

The second tab 321 according to the embodiments may have the form of a foil extending in the first direction from a second uncoated portion 222 of the second electrode 220. The second tab 321 may have an approximately rectangular shape. However, the shape of the second tab 321 is not limited thereto and may be changed in design into various shapes.

The second tab 321 may be formed integrally with the second electrode 220. For example, the second tab 321 may be a region of the second uncoated portion 222 remaining after a partial region of the second uncoated portion 222 is cut or removed by notching processing, etc. On the other hand, the second tab 321 may be connected to the second uncoated portion 222 by welding, etc., after being manufactured separately from the second electrode 220. A material for the second tab 321 may be the same as a material for the second electrode 220.

The number of second tabs 321 may be equal to the number of second electrodes 220. Each second tab 321 may extend separately from the second uncoated portion 222 of a different second electrode 220. The plurality of second tabs 321 may be stacked in the second direction. The plurality of second tabs 321 may be arranged parallel to one another. Accordingly, the second tab member 320 according to the embodiments may include a group of the plurality of second tabs 321 stacked in the second direction. The adjacent second tabs 321 may be in contact with one another and may be spaced apart by a sum of a thickness of the separator 230 and a thickness of the first electrode 210.

The second terminal 420 may function as the bus bar 3 or a component that provides electrical connection between an external power device and the second electrode 220 of the secondary battery 2. The second terminal 420 may be electrically connected to the second electrode 220. Accordingly, the second terminal 420 may function as the negative-electrode terminal of the secondary battery 2.

The second terminal 420 according to the embodiments may be formed of an electrically conductive material such as aluminum, nickel, copper, etc.

The first terminal 410 and the second terminal 420 may be spaced apart by a predetermined distance in the third direction. As an example, the second terminal 420 may be spaced apart from the first terminal 410 by a predetermined distance in the third direction.

The second terminal 420 may penetrate the case 100 and be arranged to face the second tab member 320. As an example, the second terminal 420 may be formed through the cap plate 102 and inserted into the interior of a second terminal hole 175 spaced apart from the first terminal hole 174 by a predetermined distance in the third direction. The bottom end of the second terminal 420 may be arranged to face the second tab member 320 in the first direction through the second terminal hole 175. A top end of the second terminal 420 may protrude upwardly from the cap plate 102. While it is shown in the drawing that the second terminal 420 has a quadrangular cross-sectional shape, the cross-sectional shape of the second terminal 420 is not limited thereto and may be changed in design into various shapes such as a circle, an oval, a polygon, etc.

The bus bar 3 may be placed on a top surface of the second terminal 420. The bus bar 3 and the second terminal 420 may be integrally bonded, for example by laser welding, etc.

One end of the bus bar 3 may be connected to the first terminal 410 of one of adjacent secondary batteries 2 inside the housing 1, and the other end of the bus bar 3 may be placed on the second terminal 420 of the other of the adjacent secondary batteries 2 inside the housing 1. Thus, the bus bar 3 may connect the adjacent secondary batteries 2 in series.

A second gasket 421 may be arranged between the cap plate 102 and the second terminal 420 according to the embodiments.

The second gasket 421 may function as a component for electrically insulating the cap plate 102 and the second terminal 420 from one another.

The second gasket 421 according to the embodiments may be formed of an insulating material such as polyethylene (PE), polypropylene (PP), polyethylene terephthalate (PET) rubber, polyphenylene sulfide (PPS), etc. An inner circumferential surface of the second gasket 421 may be arranged to surround an outer circumferential surface of the second terminal 420. The outer circumferential surface of the second gasket 421 may be fixed to the inner circumferential surface of the cap plate 102 surrounding the second terminal hole 175.

The second current collector 520 and the second adhesive member 620 may function as a component for providing electrical connection between the second terminal 420 and the second tab member 320.

The second current collector 520 may be arranged inside the case 100 and connected to the second terminal 420. The second current collector 520 may be formed of a conductive material such as copper, aluminum, nickel, etc.

The second current collector 520 may be arranged spaced apart from the first current collector 510 in the third direction.

The second current collector 520 according to the embodiments may include a second terminal plate 521 and a second tab plate 522.

The second terminal plate 521 may form a side exterior of the second current collector 520 and may support the second tab plate 522.

The second terminal plate 521 according to the embodiments may have the form of a plate perpendicular to the first direction. The second terminal plate 521 may be arranged between the second tab member 320 and the second terminal 420. In the embodiments, the second tab member 320, the second terminal plate 521, and the second terminal 420 may be arranged sequentially in the first direction.

The second terminal plate 521 and the second terminal 420 may be mechanically and electrically connected by welding. In an example, the top surface of the second terminal plate 521 may contact the bottom surface of the second terminal 420, and the top surface of the second terminal plate 521 and the bottom surface of the second terminal 420 may be bonded to one another by laser welding or ultrasonic welding.

The bottom surface of the second terminal plate 521 may be spaced apart from the second tab member 320 in the first direction by a predetermined distance. The bottom surface of the second terminal plate 521 may be arranged to face a part of the top surface of the second tab member 320.

The cross-sectional area of the second terminal plate 521 perpendicular to the first direction may be less than the cross-sectional area of the second tab member 320 perpendicular to the first direction. The cross-sectional area of the second terminal plate 521 perpendicular to the first direction may be less than or equal to the cross-sectional area of the second terminal 420 perpendicular to the first direction.

In the embodiments, a width W3 of the second terminal plate 521 in the second direction may be equal to the width WO of the electrode assembly 200 in the second direction.

The cross-sectional shape of the first terminal plate 511 may be designed in various shapes, such as a circular shape, an oval shape, a polygonal shape, etc., as well as the rectangular shape shown in the drawing.

The second tab plate 522 may be connected to the second terminal plate 521, and may form the other side exterior of the second current collector 520.

The second tab plate 522 according to the embodiments may have the form of a plate perpendicular to the first direction. One end of the second tab plate 522 may be connected to a side surface of the second terminal plate 521. An end of the second tab plate 522 may be directly connected to the side surface of the second terminal plate 521, or may be indirectly connected to the side surface of the second terminal plate 521 by other connecting means.

The second tab plate 522 may be provided as a pair. The pair of second tab plates 522 may be arranged on opposite sides of the second terminal plate 521. In an example, the pair of second tab plates 522 may be arranged to face one another in the third direction with the second terminal plate 521 therebetween.

The second tab plate 522 may be arranged between the second tab member 320 and the cap plate 102. A top surface of the second tab plate 522 may be spaced apart from a bottom surface of the cap plate 102 by a predetermined distance in a direction opposite to the first direction.

A bottom surface of the second tab plate 522 may be arranged to face a top surface of the second tab member 320. For example, the bottom surface of the second tab plate 522 may be arranged to face the remaining part of the top surface of the second tab member 320 that does not face the second terminal plate 521. The bottom surface of the second tab plate 522 may be spaced apart from the second tab member 320 in the first direction by a predetermined distance.

In the embodiments, a width W4 of the second tab plate 522 in the second direction may be equal to the width WO of the electrode assembly 200 in the second direction. Thus, the second tab plate 522 may be arranged to face all of the plurality of second tabs 321 stacked in the second direction.

A thickness t3 of the second terminal plate 521 in the first direction may be greater than a thickness t4 of the second tab plate 522 in the first direction. Thus, the second terminal plate 521 may more easily contact the second terminal 420.

The second adhesive member 620 may be in contact with the second current collector 520 and the second tab member 320. The second adhesive member 620 may mechanically and electrically connect the second current collector 520 and the second tab member 320.

The second adhesive member 620 according to the embodiments may include a conductive adhesive having both conductive and adhesive properties. For example, the second adhesive member 620 may include a conductive adhesive, or may include a conductive adhesive mixed with other additives.

The conductive adhesive included in the second adhesive member 620 may be the same as the conductive adhesive included in the first adhesive member 610.

The second adhesive member 620 may be melted in the liquid state and come into contact with the second current collector 520 and the second tab member 320, and may be hardened to the solid state and mechanically and electrically connect the second current collector 520 to the second tab member 320.

The second adhesive member 620 according to the embodiments may include a second adhesive layer 621.

The second adhesive layer 621 may electrically and mechanically connect the second tab member 320 to the second tab plate 522.

The second adhesive layer 621 according to the embodiments may have the form of a film having a predetermined thickness between the second tab member 320 and the second tab plate 522. The thickness of the second adhesive layer 621 may be variously design-changed depending on a distance between the second tab member 320 and the second tab plate 522, etc. The area of the second adhesive layer 621 may be equal to the area of a part of the top surface of the second tab member 320 that faces the second tab plate 522 in the entire area of the top surface of the second tab member 320.

The second adhesive layer 621 may be provided in a pair. Each second adhesive layer 621 may be individually arranged under a different second tab plate 522.

The second adhesive layer 621 may be formed by applying a conductive adhesive melted to the liquid state to the top surface of the second tab member 320 facing the second tab plate 522. The second tab plate 522 may be placed on the second adhesive layer 621 applied to the second tab member 320, and the second adhesive layer 621 may be hardened to the solid state and may electrically and mechanically connect the second tab plate 522 to the second tab member 320.

Although the secondary battery 2 according to the embodiments has been described herein using an example in which the secondary battery 2 includes all of the second tab member 320, the second terminal 420, the second current collector 520, and the second adhesive member 620, the secondary battery 2 according to the embodiments is not limited thereto, and the secondary battery 2 may not include all of the second tab member 320, the second terminal 420, the second current collector 520, and the second adhesive member 620, or may include only some of the second tab member 320, the second terminal 420, the second current collector 520, and the second adhesive member 620.

For example, when the secondary battery 2 is configured not to include the second tab member 320, the second terminal 420, the second current collector 520, and the second adhesive member 620, the second electrode 220 of the secondary battery 2 may be connected to the bus bar 3 by directly protruding outwardly from the case 100, or may be connected to the bus bar 3 by a separate electrical connection means, such as a wire, etc.

The secondary battery 2 may be configured to include only the second tab member 320 and the second terminal 420. In this case, the second tab member 320 may be directly connected to the second terminal 420.

Hereinbelow, the battery module according to embodiments of the present disclosure will be described.

The battery module according to the embodiments may be different from the battery module according to other embodiments (e.g., embodiments as shown in Fig. 1) in terms of a detailed configuration of the secondary battery 2.

Accordingly, in describing the battery module according to the embodiments, only the detailed configuration of the secondary battery 2, which may be different from the battery module according to other embodiments of the present disclosure (e.g., embodiments as shown in Fig. 1), will be described.

For the rest of the configuration of the battery module according to the embodiments, the description of the battery module according to other embodiments of the present disclosure may be applied.

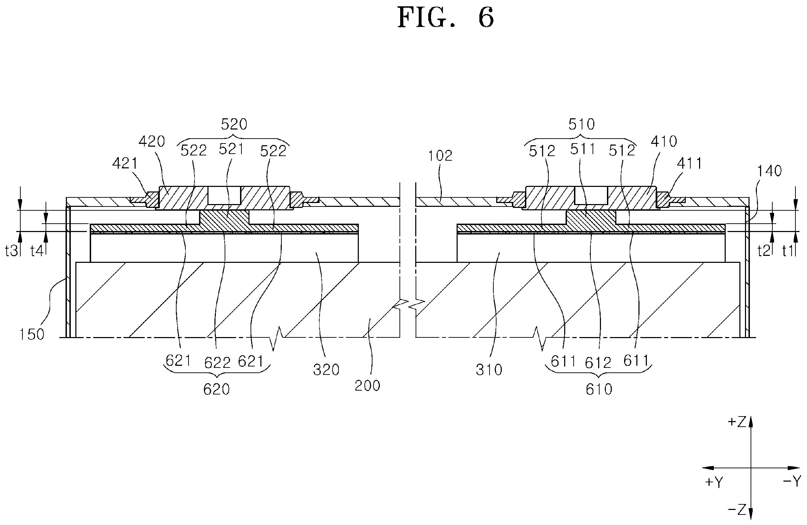

FIG. 6 is a cross-sectional view schematically showing the configuration of the secondary battery according to embodiments of the present disclosure.

Referring to FIG. 6, the first adhesive member 610 according to the embodiments may further include a first extended adhesive layer 612.

The first extended adhesive layer 612 may electrically and mechanically connect the first tab member 310 to the first terminal plate 511. The first extended adhesive layer 612 may function as a component that extends an electrical connection path between the first tab member 310 and the first current collector 510 and lowers a resistance between the first tab member 310 and the first current collector 510.

The first extended adhesive layer 612 according to the embodiments may have the form of a film having a predetermined thickness between the first tab member 310 and the first terminal plate 511. The thickness of the first extended adhesive layer 612 may be variously design-changed depending on a distance between the first tab member 310 and the first terminal plate 511, etc. The thickness of the first extended adhesive layer 612 may be the same as or different from the thickness of the first adhesive layer 611.

The area of the first extended adhesive layer 612 may be equal to the area of a part of the top surface of the first tab member 310 that faces the first terminal plate 511 in the entire area of the top surface of the first tab member 310.

The first extended adhesive layer 612 may be connected to the first adhesive layer 611. For example, the first extended adhesive layer 612 may be arranged between a pair of first adhesive layers 611, and opposite ends of the first extended adhesive layer 612 may be connected to the pair of first adhesive layers 611, respectively.

The first extended adhesive layer 612 may be melted into the liquid state and then applied to the top surface of the first tab member 310 facing the first terminal plate 511. Thereafter, the first terminal plate 511 may be placed on the first extended adhesive layer 612 applied to the first tab member 310, and the first extended adhesive layer 612 may be hardened to the solid state and may electrically and mechanically connect the first terminal plate 511 to the first tab member 310.

The first adhesive layer 611 and the first extended adhesive layer 612 may be formed simultaneously by applying the conductive adhesive melted into the liquid state to the entire top surface of the first tab member 310.

The second adhesive member 620 according to the embodiments may further include a second extended adhesive layer 622.

The second extended adhesive layer 622 may electrically and mechanically connect the second tab member 320 to the second terminal plate 521. The second extended adhesive layer 622 may function as a component that extends an electrical connection path between the second tab member 320 and the second current collector 520 and lowers a resistance between the second tab member 320 and the second current collector 520.

The second extended adhesive layer 622 according to the embodiments may have the form of a film having a predetermined thickness between the second tab member 320 and the second terminal plate 521. The thickness of the second extended adhesive layer 622 may be variously design-changed depending on a distance between the second tab member 320 and the second terminal plate 521, etc. The thickness of the second extended adhesive layer 622 may be the same as or different from the thickness of the second adhesive layer 621.

The area of the second extended adhesive layer 622 may be equal to the area of a part of the top surface of the second tab member 320 that faces the second terminal plate 521 in the entire area of the top surface of the second tab member 320.

The second extended adhesive layer 622 may be connected to the second adhesive layer 621. For example, the second extended adhesive layer 622 may be arranged between a pair of second adhesive layers 621, and opposite ends of the second extended adhesive layer 622 may be connected to the pair of second adhesive layers 621, respectively.

The second extended adhesive layer 622 may be melted into the liquid state and then applied to the top surface of the second tab member 320 facing the second terminal plate 521. Thereafter, the second terminal plate 521 may be placed on the second extended adhesive layer 622 applied to the second tab member 320, and the second extended adhesive layer 622 may be hardened to the solid state and may electrically and mechanically connect the second terminal plate 521 to the second tab member 320.

The second adhesive layer 621 and the second extended adhesive layer 622 may be formed simultaneously by applying the conductive adhesive melted into the liquid state to the entire top surface of the second tab member 320.

Hereinbelow, the battery module according to embodiments of the present disclosure will be described.

The battery module according to the embodiments may be different from the battery module according to other embodiments (e.g., embodiments as shown in Figs. 1-5) in terms of detailed configurations of the battery modules according to the other embodiments (e.g., embodiments as shown in Figs. 1-6) and the secondary battery 2.

Accordingly, in describing the battery module according to the embodiments, only the detailed configuration of the secondary battery 2, which is different from the battery module according to other embodiments of the present disclosure, will be described.

For the rest of the configuration of the battery module according to the embodiments, the description of the battery module according to other embodiments (e.g., embodiments as shown in Figs. 1-6) of the present disclosure may be applied.

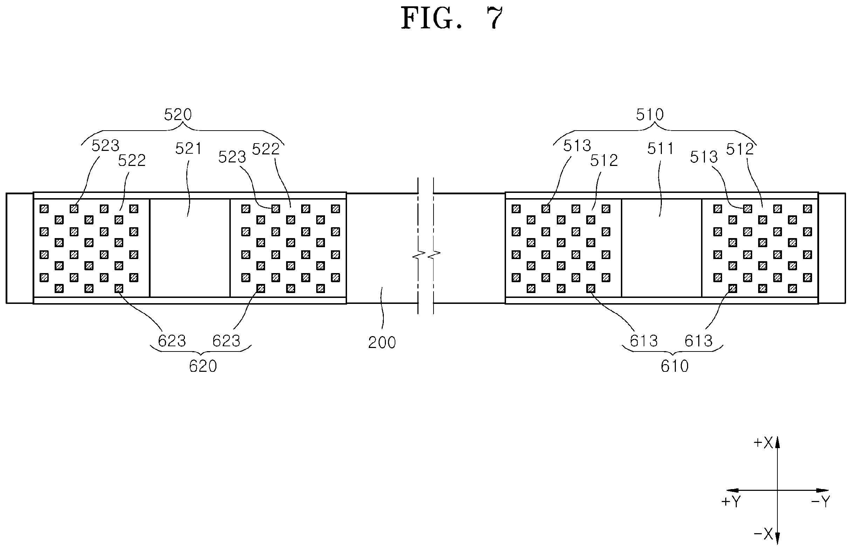

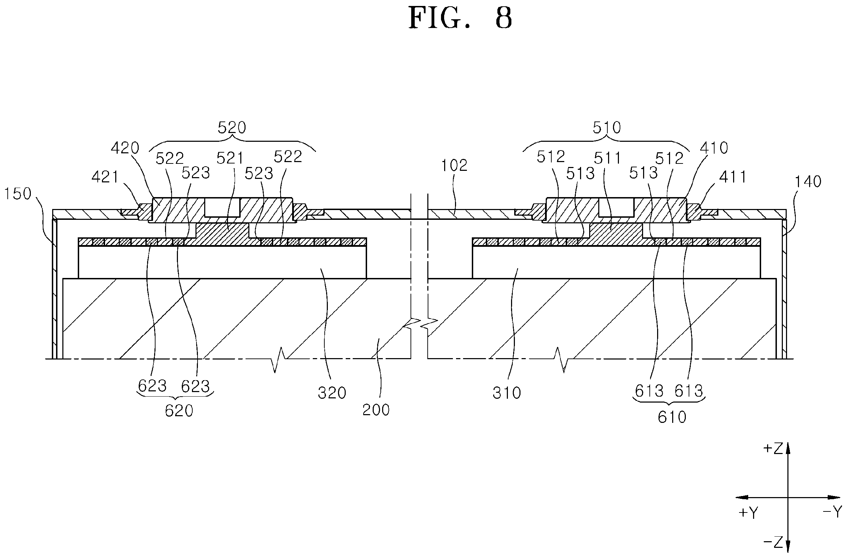

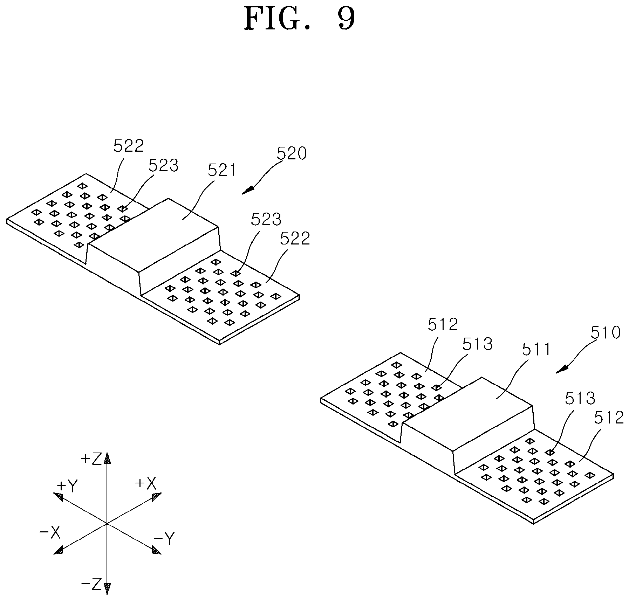

FIG. 7 is a plan view schematically showing the configuration of the secondary battery according to embodiments of the present disclosure, FIG. 8 is a cross-sectional view schematically showing the configuration of the secondary battery according to embodiments of the present disclosure, and FIG. 9 is a perspective view schematically showing configurations of a first current collector and a second current collector according to embodiments of the present disclosure.

Referring to FIGS. 7 to 9, the first current collector 510 according to the embodiments may further include a first inlet hole 513.

The first inlet hole 513 may form an injection path for the first adhesive member 610 on the first tab plate 512.

The first inlet hole 513 according to the embodiments may have the form of a hole penetrating the first tab plate 512 in the first direction. The cross-sectional shape of the first inlet hole 513 may be designed in various shapes, such as a circular shape, an oval shape, a polygonal shape, etc., as well as the rectangular shape shown in FIG. 9.

The first inlet hole 513 may be provided in plural. The plurality of first inlet holes 513 may be spaced apart from one another in the first tab plate 512. The plurality of first inlet holes 513 may be arranged to form various patterns such as a grid pattern, etc.

At least one first inlet hole 513 may be formed in each first tab plate 512. The number of first inlet holes 513 formed in each first tab plates 512 may be identical or different.

In the embodiments, the first tab plate 512 and the first terminal plate 511 may contact the top surface of the first tab member 310. Thus, the first adhesive member 610 according to the embodiments may not include the first adhesive layer 611 and the first extended adhesive layer 612.

The first adhesive member 610 according to the embodiments may include a first adhesive filler 613.

The first adhesive filler 613 may be arranged inside the first inlet hole 513. A peripheral surface of the first adhesive filler 613 may be adhered to the inner circumferential surface of the first tab plate 512 arranged to surround the first inlet hole 513. The bottom surface of the first adhesive filler 613 may be adhered to the top surface of the first tab member 310. The first adhesive filler 613 may electrically and mechanically connect the first tab member 310 to the first current collector 510.

The first adhesive filler 613 may be formed by injecting a conductive adhesive melted into the liquid state into the interior of the first inlet hole 513 through the top end of the first inlet hole 513.

The first adhesive filler 613 may be provided in plural. The number of first adhesive fillers 613 may be equal to the number of first inlet holes 513. Each first adhesive filler 613 may be individually arranged inside a different first inlet hole 513.

The second current collector 520 according to the embodiments may further include a second inlet hole 523.

The second inlet hole 523 may form an injection path for the second adhesive member 620 on the second tab plate 522.

The second inlet hole 523 according to the embodiments may have the form of a hole penetrating the second tab plate 522 in the first direction. The cross-sectional shape of the second inlet hole 523 may be designed in various shapes, such as a circular shape, an oval shape, a polygonal shape, etc., as well as the rectangular shape shown in FIG. 9.

The second inlet hole 523 may be provided in plural. The plurality of second inlet holes 523 may be spaced apart from one another in the second tab plate 522. The plurality of second inlet holes 523 may be arranged to form various patterns such as a grid pattern, etc.

At least one second inlet hole 523 may be formed in each second tab plate 522. The number of second inlet holes 523 formed in each second tab plates 522 may be identical or different.

In the embodiments, the second tab plate 522 and the second terminal plate 521 may contact the top surface of the second tab member 320. Thus, the second adhesive member 620 according to the embodiments may not include the second adhesive layer 621 and the second extended adhesive layer 622.

The second adhesive member 620 according to the embodiments may include a second adhesive filler 623.

The second adhesive filler 623 may be arranged inside the second inlet hole 523. A peripheral surface of the second adhesive filler 623 may be adhered to the inner circumferential surface of the second tab plate 522 arranged to surround the second inlet hole 523. The bottom surface of the second adhesive filler 623 may be adhered to the top surface of the second tab member 320. The second adhesive filler 623 may electrically and mechanically connect the second tab member 320 to the second current collector 520.

The second adhesive filler 623 may be formed by injecting a conductive adhesive melted into the liquid state into the interior of the second inlet hole 523 through the top end of the second inlet hole 523.

The second adhesive filler 623 may be provided in plural. The number of second adhesive fillers 623 may be equal to the number of second inlet holes 523. Each second adhesive filler 623 may be individually arranged inside a different second inlet hole 523.

Hereinbelow, the battery module according to embodiments of the present disclosure will be described.

The battery module according to the embodiments may be different from the battery module according to other embodiments (e.g., embodiments according to Figs. 7-9) in terms of a detailed configuration of the secondary battery 2.

Accordingly, in describing the battery module according to the embodiments, only the detailed configuration of the secondary battery 2, which is different from the battery module according to other embodiments (e.g., embodiments according to Figs. 7-9) of the present disclosure, will be described.

For the rest of the configuration of the battery module according to the embodiments, the description of the battery module according to other embodiments of the present disclosure (e.g., embodiments according to Figs. 7-9) may be applied.

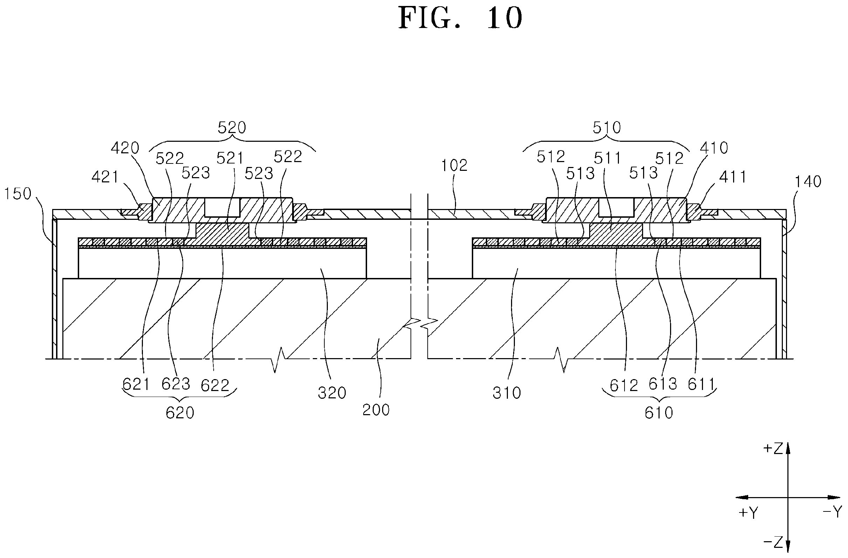

FIG. 10 is a cross-sectional view schematically showing the configuration of the secondary battery according to embodiments of the present disclosure.

Referring now to FIG. 10, the first current collector 510 according to the embodiments may be configured to be the same as the first current collector 510 described with reference to FIGS. 7 to 9.

The first terminal plate 511 and the first tab plate 512 according to the embodiments may be spaced apart from the top surface of the first tab member 310 by a predetermined distance.

The first adhesive member 610 according to the embodiments may further include the first adhesive layer 611.

The first adhesive layer 611 may be configured to be the same as the first adhesive layer 611 described with reference to FIGS. 1 to 5.

The bottom end of the first adhesive filler 613 may be connected to the first adhesive layer 611. The first adhesive filler 613 may be formed to extend from the first adhesive layer 611 in the first direction.

In the embodiments, the first adhesive layer 611 and the first adhesive filler 613 may be formed by injecting a conductive adhesive melted into the liquid state into the first inlet hole 513.

The conductive adhesive injected into the first inlet hole 513 may be filled into a space between the first tab plate 512 and the first tab member 310, may be hardened to the solid state, and form the first adhesive layer 611.

The conductive adhesive may be filled into the first inlet hole 513, may be hardened to the solid state, and form the first adhesive filler 613.

However, the present disclosure is not limited thereto, and the first adhesive layer 611 may be formed by applying the conductive adhesive to the top surface of the first tab member 310, and the first adhesive filler 613 may be formed by injecting a conductive adhesive into the first inlet hole 513 after the first current collector 510 is placed on the first adhesive layer 611.

The first adhesive member 610 according to the embodiments may further include the first extended adhesive layer 612.

The first extended adhesive layer 612 may be configured to be the same as the first extended adhesive layer 612 described with reference to FIG. 6.

The first extended adhesive layer 612 according to the embodiments may be formed by injecting a conductive adhesive melted into the liquid state into the first inlet hole 513.

The conductive adhesive injected into the first inlet hole 513 may be filled into the space between the first tab plate 512 and the first tab member 310, and may be introduced into a space between the first terminal plate 511 and the first tab member 310 by its own flowing force to form the first extended adhesive layer 612.

However, the present disclosure is not limited thereto, and a conductive adhesive may be applied to the top surface of the first tab member 310 to form the first extended adhesive layer 612.

The second current collector 520 according to the embodiments may be configured to be the same as the second current collector 520 described with reference to FIGS. 7 to 9.

The second terminal plate 521 and the second tab plate 522 according to the embodiments may be spaced apart from the top surface of the second tab member 320 by a predetermined distance.

The second adhesive member 620 according to the embodiments may further include the second adhesive layer 621.

The second adhesive layer 621 may be configured to be the same as the second adhesive layer 621 described with reference to FIGS. 1 to 5.

The bottom end of the second adhesive filler 623 may be connected to the second adhesive layer 621. The second adhesive filler 623 may be formed to extend from the second adhesive layer 621 in the first direction.

In the embodiments, the second adhesive layer 621 and the second adhesive filler 623 may be formed by injecting a conductive adhesive melted into the liquid state into the second inlet hole 523.

The conductive adhesive injected into the second inlet hole 523 may be filled into a space between the second tab plate 522 and the second tab member 320, may be hardened to the solid state, and form the second adhesive layer 621.

The conductive adhesive may be filled into the second inlet hole 523, may be hardened to the solid state, and form the second adhesive filler 623.

However, the present disclosure is not limited thereto, and the second adhesive layer 621 may be formed by applying the conductive adhesive to the top surface of the second tab member 320, and the second adhesive filler 623 may be formed by injecting a conductive adhesive into the second inlet hole 523 after the second current collector 520 is placed on the second adhesive layer 621.

The second adhesive member 620 according to the embodiments may further include the second extended adhesive layer 622.

The second extended adhesive layer 622 may be configured to be the same as the second extended adhesive layer 622 described with reference to FIG. 6.

The second extended adhesive layer 622 according to the embodiments may be formed by injecting a conductive adhesive melted into the liquid state into the second inlet hole 523.

The conductive adhesive injected into the second inlet hole 523 may be filled into the space between the second tab plate 522 and the second tab member 320, and may be introduced into a space between the second terminal plate 521 and the second tab member 320 by its own flowing force to form the second extended adhesive layer 622.

However, the present disclosure is not limited thereto, and a conductive adhesive may be applied to the top surface of the second tab member 320 to form the second extended adhesive layer 622.

Hereinbelow, the battery module according to embodiments of the present disclosure will be described.

The battery module according to the embodiments may be different from the battery module according to other embodiments in terms of detailed configurations of the battery modules (e.g., embodiments according to Figs. 7-10) and the secondary battery 2.

Accordingly, in describing the battery module according to the embodiments, only the detailed configuration of the secondary battery 2, which is different from the battery module according to other embodiments of the present disclosure (e.g., embodiments according to Figs. 7-10), will be described.

For the rest of the configuration of the battery module according to the embodiments, the description of the battery module according to other embodiments (e.g., embodiments according to Figs. 7-10) of the present disclosure may be applied.

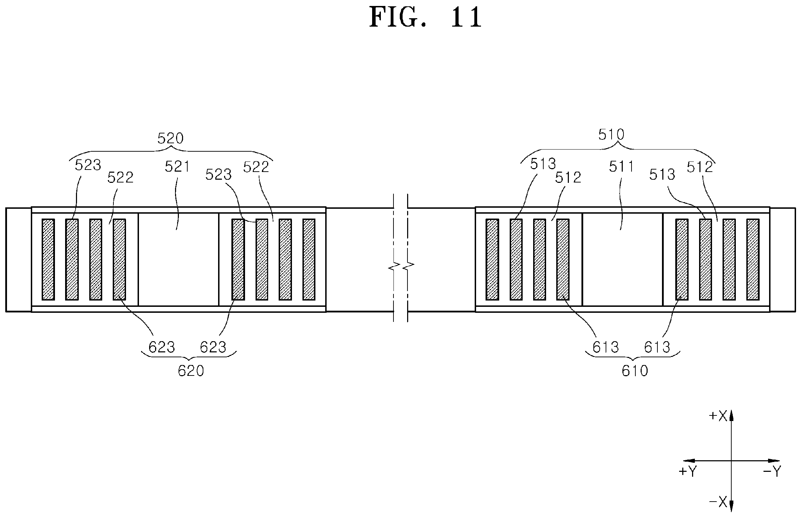

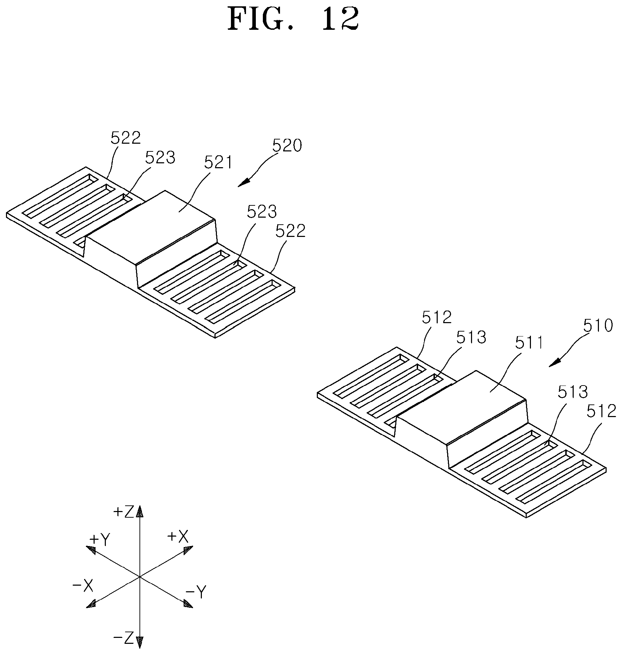

FIG. 11 is a plan view schematically showing the configuration of the secondary battery according to embodiments of the present disclosure, and FIG. 12 is a perspective view schematically showing the configurations of the first current collector and the second current collector according to embodiments of the present disclosure.

Referring to FIGS. 11 and 12, the first inlet hole 513 according to the embodiments may have the form of a long hole extending in the second direction. The plurality of first inlet holes 513 formed in each first tab plate 512 may be arranged in the third direction. The plurality of first inlet holes 513 formed in each first tab plate 512 may be arranged in parallel to one another.

The width of the first inlet hole 513 in the second direction may be greater than or equal to the width of the first tab member 310 in the second direction. Thus, each first adhesive filer 613 may be electrically connected to all of the plurality of first tabs 311 stacked in the second direction.

The second inlet hole 523 according to the embodiments may have the form of a long hole extending in the second direction. The plurality of second inlet holes 523 formed in each second tab plate 522 may be arranged in the third direction. The plurality of second inlet holes 523 formed in each second tab plate 522 may be arranged in parallel to one another.

The width of the second inlet hole 523 in the second direction may be greater than or equal to the width of the second tab member 320 in the second direction. Thus, each second adhesive filer 623 may be electrically connected to all of the plurality of second tabs 321 stacked in the second direction.

Hereinbelow, the battery module according to embodiments of the present disclosure will be described.

The battery module according to the embodiments may be different from the battery module according to other embodiments (e.g., embodiments as shown in Fig. 7-12) in terms of detailed configurations of the battery modules according to other embodiments and the secondary battery 2.

Accordingly, in describing the battery module according to the embodiments, only the detailed configuration of the secondary battery 2, which is different from the battery module according to other embodiments of the present disclosure, will be described.

For the rest of the configuration of the battery module according to the embodiments, the description of the battery module according to other embodiments of the present disclosure may be applied.

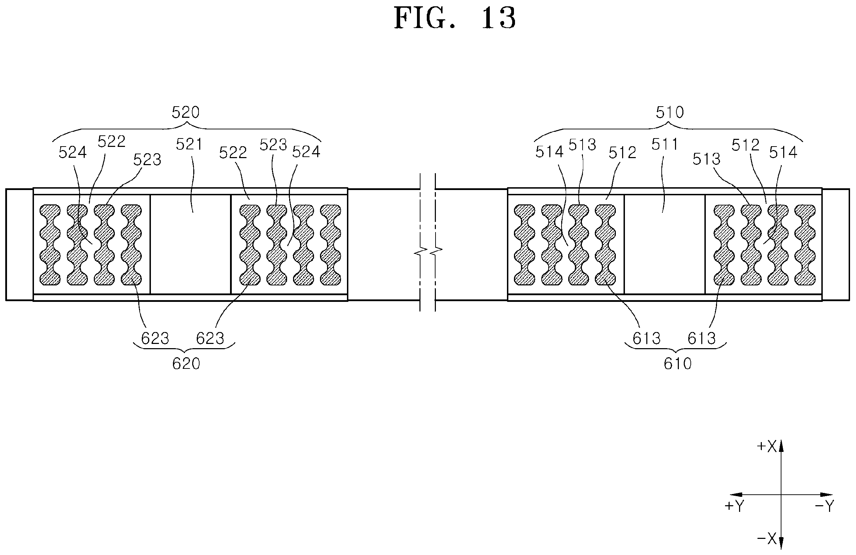

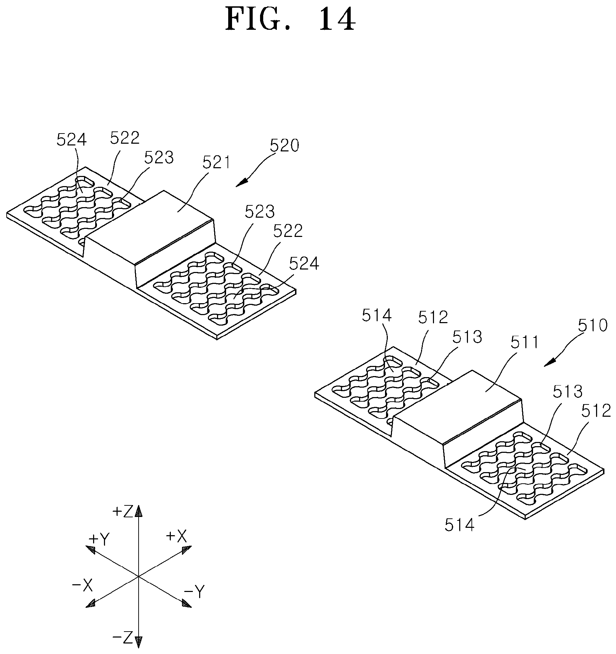

FIG. 13 is a plan view schematically showing the configuration of the secondary battery according to embodiments of the present disclosure, and FIG. 14 is a perspective view schematically showing the configurations of the first current collector and the second current collector according to embodiments of the present disclosure.

Referring to FIGS. 13 and 14, the first current collector 510 according to the embodiments may further include a first protrusion 514.

The first protrusion 514 may protrude from the first tab plate 512 to the inside of the first inlet hole 513.

The first protrusion 514 according to the embodiments may extend from the inner circumferential surface of the first tab plate 512 arranged to surround the first inlet hole 513 toward the first inlet hole 513.

The cross-sectional shape of the first protrusion 514 may be design-changed into a variety of shapes, such as a polygonal or atypical shape, as well as an arc shape shown in FIGS. 13 and 14.

The first protrusion 514 may be provided in plural. Inside each first inlet hole 513, at least one first protrusion 514 may be arranged.

Thus, the first protrusion 514 may lower a resistance between the first tab member 310 and the first terminal 410 by increasing a contact area between the first current collector 510 and the first adhesive member 610. The first protrusion 514 may also strengthen a bonding force between the first current collector 510 and the first adhesive member 610, thereby preventing the first current collector 510 from leaving a regular position.

The second current collector 520 according to the embodiments may further include a second protrusion 524.

The second protrusion 524 may protrude from the second tab plate 522 to the inside of the second inlet hole 523.

The second protrusion 524 according to the embodiments may extend from the inner circumferential surface of the second tab plate 522 arranged to surround the second inlet hole 523 toward the second inlet hole 523.

The cross-sectional shape of the second protrusion 524 may be design-changed into a variety of shapes, such as a polygonal or atypical shape, as well as an arc shape shown in FIGS. 13 and 14.

The second protrusion 524 may be provided in plural. Inside each second inlet hole 523, at least one second protrusion 524 may be arranged.

Thus, the second protrusion 524 may lower a resistance between the second tab member 320 and the second terminal 420 by increasing a contact area between the second current collector 520 and the second adhesive member 620. The second protrusion 524 may also strengthen a bonding force between the second current collector 520 and the second adhesive member 620, thereby preventing the second current collector 520 from leaving a regular position.

Hereinbelow, the battery module according to embodiments of the present disclosure will be described.

The battery module according to the embodiments may be different from the battery module according to other embodiments (e.g., embodiments according to Figs. 1-5) in terms of detailed configurations of the battery modules according to the other embodiments (e.g., embodiments according to Figs. 1-13) and the secondary battery 2.

Accordingly, in describing the battery module according to the embodiments, only the detailed configuration of the secondary battery 2, which is different from the battery module according to other embodiments of the present disclosure (e.g., embodiments according to Figs. 1-13), will be described.

For the rest of the configuration of the battery module according to the embodiments, the description of the battery module according to other embodiments of the present disclosure may be applied (e.g. embodiments according to Figs. 1-13).

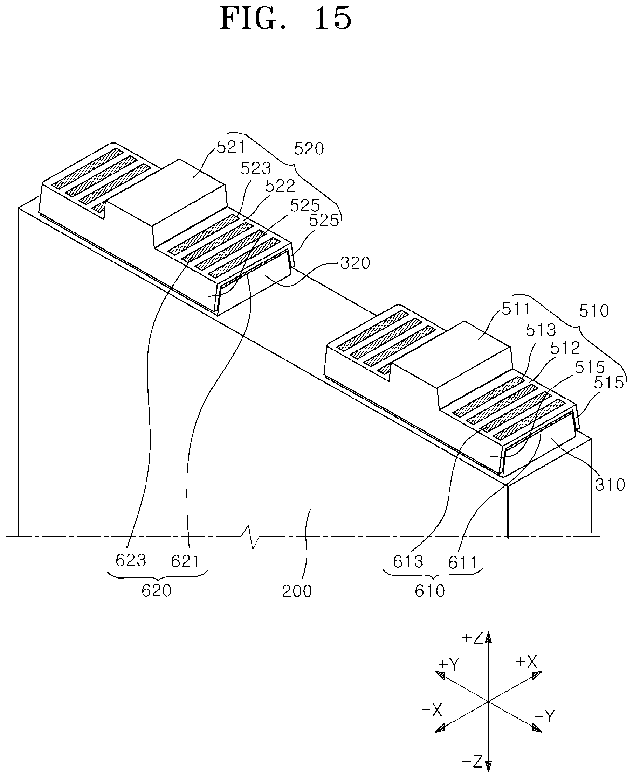

FIG. 15 is a perspective view schematically showing the configuration of the secondary battery according to embodiments of the present disclosure.

Referring to FIG. 15, the first current collector 510 according to the embodiments may further include a first cover plate 515.

The first cover plate 515 may be connected to at least one of the first terminal plate 511 and the first tab plate 512, and may be arranged to surround the first tab member 310.

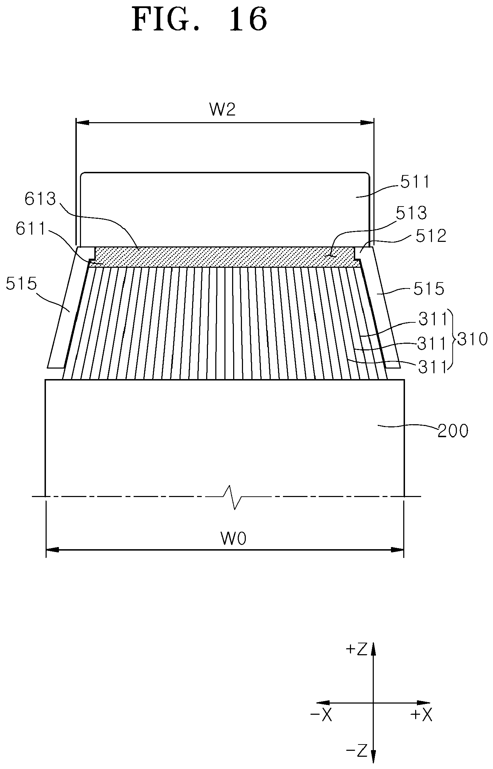

FIG. 16 is a cross-sectional view schematically showing a configuration of a first cover plate according to embodiments of the present disclosure.

Referring to FIGS. 15 and 16, the first cover plate 515 according to the embodiments may have the form of a plate arranged to face a side surface of the first tab member 310. The top end of the first cover plate 515 may be connected to the first terminal plate 511 and the first tab plate 512. On the other hand, the top end of the first cover plate 515 may be connected to any one of the first terminal plate 511 and the first tab plate 512.

The first cover plate 515 may be provided as a pair. The pair of first cover plates 515 may be arranged to surround opposite sides of the first tab member 310. Thus, the pair of first cover plates 515 may ensure that the first current collector 510 is stably supported against the first tab member 310.

The pair of first cover plates 515 may be arranged to face one another in the second direction. Each first cover plate 515 may be arranged to face opposite side surfaces of the first tab member 310 spaced apart from one another in the second direction. Thus, the first cover plate 515 may prevent some first tabs 311 from being not adhered to the first adhesive member 610 by positioning the plurality of first tabs 311 stacked in the second direction so as to face the first tab plate 512.

In the embodiments, the pair of first cover plates 515 may be arranged inclinedly with respect to the first direction. For example, the width W2 of the first tab plate 512 parallel to the second direction may be less than the width WO of the electrode assembly 200 in the second direction. The distance between the pair of first cover plates 515 may decrease in the first direction, i.e., toward the first tab plate 512. Thus, the first cover plate 515 may be formed such that the first tabs 311 stacked in the second direction are in close contact with one another, and the width of the first tab member 310 in the second direction decreases toward the first direction. Thus, the first cover plate 515 may prevent the first adhesive member 610 from being introduced between adjacent first tabs 311 and strengthen the bonding force between the first adhesive member 610 and the first tab member 310.

The second current collector 520 according to the embodiments may further include a second cover plate 525.

The second cover plate 525 may be connected to at least one of the second terminal plate 521 and the second tab plate 522, and may be arranged to surround the second tab member 320.

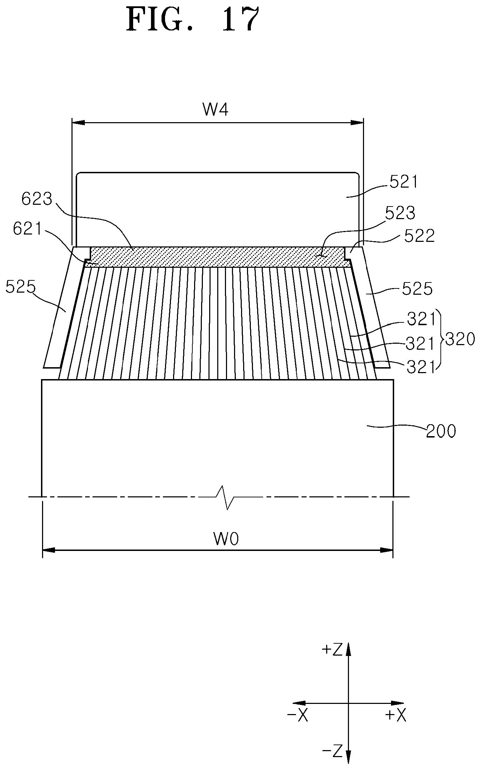

FIG. 17 is a cross-sectional view schematically showing a configuration of a second cover plate according to embodiments of the present disclosure.

Referring to FIG. 17, the second cover plate 525 according to the embodiments may have the form of a plate arranged to face a side surface of the second tab member 320. The top end of the second cover plate 525 may be connected to the second terminal plate 521 and the second tab plate 522. On the other hand, the top end of the second cover plate 525 may be connected to any one of the second terminal plate 521 and the second tab plate 522.

The second cover plate 525 may be provided as a pair. The pair of second cover plates 525 may be arranged to surround opposite sides of the second tab member 320. Thus, the pair of second cover plates 525 may ensure that the second current collector 520 is stably supported against the second tab member 320.

The pair of second cover plates 525 may be arranged to face one another in the second direction. Each second cover plate 525 may be arranged to face opposite side surfaces of the second tab member 320 spaced apart from one another in the second direction. Thus, the second cover plate 525 may prevent some second tabs 321 from being not adhered to the second adhesive member 620 by positioning the plurality of second tabs 321 stacked in the second direction so as to face the first tab plate 512.

In the embodiments, the pair of second cover plates 525 may be arranged inclinedly with respect to the first direction. For example, the width W4 of the second tab plate 522 parallel to the second direction may be less than the width WO of the electrode assembly 200 in the second direction. The distance between the pair of second cover plates 525 may decrease in the first direction, i.e., toward the second tab plate 522. Thus, the second cover plate 525 may be formed such that the second tabs 321 stacked in the second direction are in close contact with one another, and the width of the second tab member 320 in the second direction decreases toward the first direction. Thus, the second cover plate 525 may prevent the second adhesive member 620 from being introduced between adjacent second tabs 321 and strengthen the bonding force between the second adhesive member 620 and the second tab member 320.

According to the present disclosure, by bonding the electrode tab to the current collector by the conductive adhesive, a bending process of the electrode tab for securing a welding surface may be removed.

According to the present disclosure, an electrical connection for all electrodes may be secured without forming the electrode tab bent in different directions, thereby reducing a manufacturing cost.

According to the present disclosure, by applying an electrode tab having an increased area and a reduced length, the total resistance of the secondary battery may be reduced.

According to the present disclosure, the lifetime of the secondary battery may be lengthened by reducing a performance deviation with respect to a difference in resistance distribution between electrodes.

However, the effects obtainable through the present disclosure are not limited to the herein effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

The present disclosure additionally includes the following numbered embodiments:
1. A secondary battery comprising:
   a case;
   an electrode assembly arranged inside the case and comprising a first electrode and a second electrode;
   a first tab member extending from the electrode assembly and connected to the first electrode;
   a first terminal penetrating the case and arranged to face the first tab member;
   a first current collector arranged inside the case and connected to the first terminal; and
   a first adhesive member in contact with the first current collector and the first tab member and electrically connecting the first current collector to the first tab member.
2. The secondary battery of embodiment 1, wherein the first current collector comprises:
   a first terminal plate arranged between the first tab member and the first terminal and in contact with the first terminal; and
   a first tab plate connected to the first terminal plate and arranged to face the first tab member.
3. The secondary battery of embodiment 2, wherein a thickness of the first terminal plate is greater than or equal to a thickness of the first tab plate.
4. The secondary battery of embodiment 2, wherein the first tab plate is provided as a pair, and the pair of first tab plates are arranged on opposite sides of the first terminal plate.
5. The secondary battery of embodiment 2, wherein the first adhesive member comprises a first adhesive layer arranged between the first tab member and the first tab plate.
6. The secondary battery of embodiment 5, wherein the first adhesive member further comprises a first extended adhesive layer connected to the first adhesive layer and arranged between the first tab member and the first terminal plate.
7. The secondary battery of embodiment 1, wherein the first current collector further comprises a plurality of first inlet holes penetrating the first tab plate, and
   the first adhesive member comprises a first adhesive filler arranged inside the first inlet hole.
8. The secondary battery of embodiment 7, wherein the first adhesive member further comprises a first adhesive layer connected to the first adhesive filler and arranged between the first tab member and the first tab plate.
9. The secondary battery of embodiment 7, wherein the first tab member comprises a plurality of first tabs extending from the first electrode in a first direction and stacked in a second direction intersecting the first direction, and
   the first inlet hole extends in the second direction.
10. The secondary battery of embodiment 9, wherein the first current collector further comprises a first protrusion protruding from the first tab plate to an inside of the first inlet hole.
11. The secondary battery of embodiment 2, wherein the first current collector further comprises a pair of first cover plates connected to at least one of the first terminal plate and the first tab plate and arranged to surround opposite sides of the first tab member.
12. The secondary battery of embodiment 11, wherein the first tab member comprises a plurality of first tabs extending from the first electrode in a first direction and stacked in a second direction intersecting the first direction, and
   the pair of first cover plates are arranged to face each other in the second direction.
13. The secondary battery of embodiment 12, wherein a width of the first tab plate in the second direction is less than a width of the electrode assembly in the second direction, and
   a distance between the pair of first cover plates decreases toward the first direction.
14. The secondary battery of embodiment 13, wherein a width of the first tab member in the second direction decreases toward the first direction.
15. The secondary battery of embodiment 1, further comprising:
   a second tab member extending from the electrode assembly and connected to the second electrode;
   a second terminal penetrating the case and arranged to face the second tab member;
   a second current collector arranged between the second terminal and the second tab member and connected to the second terminal; and
   a second adhesive member in contact with the second current collector and the second tab member and electrically connecting the second current collector to the second tab member.
16. The secondary battery of embodiment 15, wherein the second current collector comprises:
   a second terminal plate arranged between the second tab member and the second terminal and in contact with the second terminal; and
   a second tab plate connected to the second terminal plate and arranged to face the second tab member.
17. The secondary battery of embodiment 16, wherein the second adhesive member comprises a second adhesive layer arranged between the second tab member and the second tab plate.
18. The secondary battery of embodiment 16, wherein the second current collector further comprises a plurality of second inlet holes penetrating the second plate, and
   the second adhesive member comprises a second adhesive filler arranged inside the second inlet hole.
19. The secondary battery of embodiment 16, wherein the second current collector further comprises a pair of second cover plates connected to at least one of the second terminal plate and the second tab plate and arranged to surround opposite sides of the second tab member.
20. A battery module comprising:
   a housing; and
   a plurality of secondary batteries arranged inside the housing,
   wherein each of the plurality of secondary batteries comprises:
      a case;
      an electrode assembly arranged inside the case and comprising a first electrode and a second electrode;
      a first tab member extending from the electrode assembly and connected to the first electrode;
      a first terminal penetrating the case and arranged to face the first tab member;
      a first current collector arranged inside the case and connected to the first terminal; and
      a first adhesive member in contact with the first current collector and the first tab member and electrically connecting the first current collector to the first tab member.

## Claims

1. A secondary battery comprising:
a case (100);
an electrode assembly (200) arranged inside the case (100) and comprising a first electrode (210) and a second electrode (220);
a first tab member (310) extending from the electrode assembly (200) and connected to the first electrode (210);
a first terminal (410) penetrating the case (100) and arranged to face the first tab member (310);
a first current collector (510) arranged inside the case (100) and connected to the first terminal (410); and
a first adhesive member (610) in contact with the first current collector (510) and the first tab member (310) and electrically connecting the first current collector (510) to the first tab member (310).

2. The secondary battery as claimed in claim 1, wherein the first current collector (510) comprises:
a first terminal plate (511) arranged between the first tab member (310) and the first terminal (410) and in contact with the first terminal (410); and
preferably a first tab plate (512) connected to the first terminal plate (511) and arranged to face the first tab member (310).

3. The secondary battery as claimed in claim 2, wherein a thickness of the first terminal plate (511) is greater than or equal to a thickness of the first tab plate (512).

4. The secondary battery as claimed in claim 2 or 3, wherein the first tab plate (512) is provided as a pair, and preferably the pair of first tab plates (512) are arranged substantially on opposite sides of the first terminal plate (511).

5. The secondary battery as claimed in any one of claims 2 to 4, wherein the first adhesive member (610) comprises a first adhesive layer (611) arranged between the first tab member (310) and the first tab plate (512).

6. The secondary battery as claimed in claim 5, wherein the first adhesive member (610) further comprises a first extended adhesive layer (612) connected to the first adhesive layer (611) and arranged between the first tab member (310) and the first terminal plate (511).

7. The secondary battery as claimed in any one of claims 1 to 6, wherein:
the first current collector (510) further comprises a plurality of first inlet holes (513) penetrating the first tab plate (512), and
preferably the first adhesive member (610) comprises a first adhesive filler (613) arranged inside the first inlet hole (513).

8. The secondary battery as claimed in claim 7, wherein the first adhesive member (610) further comprises a first adhesive layer (611) connected to the first adhesive filler (613) and arranged between the first tab member (310) and the first tab plate (512).

9. The secondary battery as claimed in claim 7 or 8, wherein:
the first tab member (310) comprises a plurality of first tabs (311) extending from the first electrode (210) in a first direction and stacked in a second direction intersecting the first direction, and
preferably the first inlet hole (513) extends substantially in the second direction.

10. The secondary battery as claimed in any one of claims 7 to 9, wherein the first current collector (510) further comprises a first protrusion protruding from the first tab plate (512) to an inside of the first inlet hole (513).

11. The secondary battery as claimed in any one of claims 2 to 10, wherein the first current collector (510) further comprises a pair of first cover plates connected to at least one of the first terminal plate (511) and the first tab plate (512) and arranged to surround substantially opposite sides of the first tab member (310).

12. The secondary battery as claimed in claim 11, wherein:
the first tab member (310) comprises a plurality of first tabs (311) extending from the first electrode (210) in a first direction and stacked in a second direction intersecting the first direction, and
preferably the pair of first cover plates are arranged to face one another substantially in the second direction.

13. The secondary battery as claimed in claim 11 or 12, wherein:
a width of the first tab plate (512) substantially in the second direction is less than a width of the electrode assembly (200) substantially in the second direction, and
preferably a distance between the pair of first cover plates decreases toward the first direction.

14. The secondary battery as claimed in any one of claims 1 to 13, further comprising:
a second tab member (320) extending from the electrode assembly (200) and connected to the second electrode (220);
a second terminal (420) penetrating the case (100) and arranged to face the second tab member (320);
a second current collector (520) arranged between the second terminal (420) and the second tab member (320) and connected to the second terminal (420); and
a second adhesive member (620) in contact with the second current collector (520) and the second tab member (320) and electrically connecting the second current collector (520) to the second tab member (320).

15. A battery module comprising:
a housing; and
a plurality of secondary batteries arranged inside the housing,
wherein each of the plurality of secondary batteries comprises:
a case (100);
an electrode assembly (200) arranged inside the case (100) and comprising a first electrode (210) and a second electrode (220);
a first tab member (310) extending from the electrode assembly (200) and connected to the first electrode (210);
a first terminal (410) penetrating the case (100) and arranged to face the first tab member (310);
a first current collector (510) arranged inside the case (100) and connected to the first terminal (410); and
a first adhesive member (610) in contact with the first current collector (510) and the first tab member (310) and electrically connecting the first current collector (510) to the first tab member (310).
